# EUROPEAN PATENT SPECIFICATION

(11) **EP 4 275 372 B1**
(45) Date of publication and mention of the grant of the patent: **17.06.2026**
(21) Application number: 21836508.8
(22) Date of filing: 14.12.2021
(51) Int. Cl.: H04W 12/043, H04W 12/033, H04L 9/40

(54) **UNTRUSTED DATA COLLECTION COORDINATION FUNCTION (DCCF) FOR SECURE DATA COLLECTION**
NICHT VERTRAUENSWÜRDIGE DATENSAMMLUNGSKOORDINATIONSFUNKTION (DCCF) ZUR SICHEREN DATENSAMMLUNG
FONCTION (DCCF) DE COORDINATION DE COLLECTE DE DONNÉES NON SÉCURISÉE PERMETTANT UNE COLLECTE DE DONNÉES SÉCURISÉE

(30) Priority: 07.01.2021 US 202163134843 P
(43) Date of publication of application: 15.11.2023
(73) Proprietor: Telefonaktiebolaget LM Ericsson (publ), 164 83 Stockholm (SE)
(72) Inventor: JOST, Christine, 24752 Dalby (SE); HÅKANSSON, Stefan, 41713 Göteborg (SE); FU, Zhang, 120 78 Stockholm (SE); COMAK, Pinar, 06370 Ankara (TR); KARAKOC, Ferhat, 34912 Istanbul (TR); MATTSSON, Ulf, 434 36 Kungsbacka (SE)
(74) Representative: Ericsson
(86) International application number: PCT/EP2021/085580
(87) International publication number: WO 2022/148611

(56) References cited:
- "3rd Generation Partnership Project; Technical Specification Group Services and System Aspects; Study on enablers for network automation for the 5G System (5GS); Phase 2 (Release 17)", vol. SA WG2, no. V17.0.0, 17 December 2020 (2020-12-17), pages 1 - 382, XP051999941, Retrieved from the Internet <URL:https://ftp.3gpp.org/Specs/latest/Rel-17/23_series/23700-91-h00.zip 23700-91-h00.docx> [retrieved on 20201217]
- OPPO: "KI#11, New Solution: Consumer authorization for data collection from DCCF", vol. SA WG2, no. Elbonia; 20200819 - 20200901, 13 August 2020 (2020-08-13), XP051920391, Retrieved from the Internet <URL:https://ftp.3gpp.org/tsg_sa/WG2_Arch/TSGS2_140e_Electronic/Docs/S2-2005564.zip S2-2005564 KI#11, New sol eNA_Consumer authorization for data collection from DCCF.doc> [retrieved on 20200813]
- ERICSSON: "Removal of token validation by NRF", vol. SA WG3, no. Dalian, CN; 20180820 - 20180824, 13 August 2018 (2018-08-13), XP051541477, Retrieved from the Internet <URL:http://www.3gpp.org/ftp/tsg%5Fsa/WG3%5FSecurity/TSGS3%5F92%5FDalian/Docs/S3%2D182383%2Ezip> [retrieved on 20180813]

## Description

### TECHNICAL FIELD

The present disclosure relates generally to the field of communication networks, and more specifically to techniques for network functions (NFs) to collect and/or consume data produced by other NFs in a communication network.

### BACKGROUND

Currently the fifth generation ("5G") of cellular systems, also referred to as New Radio (NR), is being standardized within the Third-Generation Partnership Project (3GPP). NR is developed for maximum flexibility to support multiple and substantially different use cases. These include enhanced mobile broadband (eMBB), machine type communications (MTC), ultra-reliable low latency communications (URLLC), side-link device-to-device (D2D), and several other use cases.

At a high level, the 5G System (5GS) consists of an Access Network (AN) and a Core Network (CN). The AN provides UEs connectivity to the CN, e.g., via base stations such as gNBs or ng-eNBs described below. The CN includes a variety of Network Functions (NF) that provide a wide range of different functionalities such as session management, connection management, charging, authentication, etc.

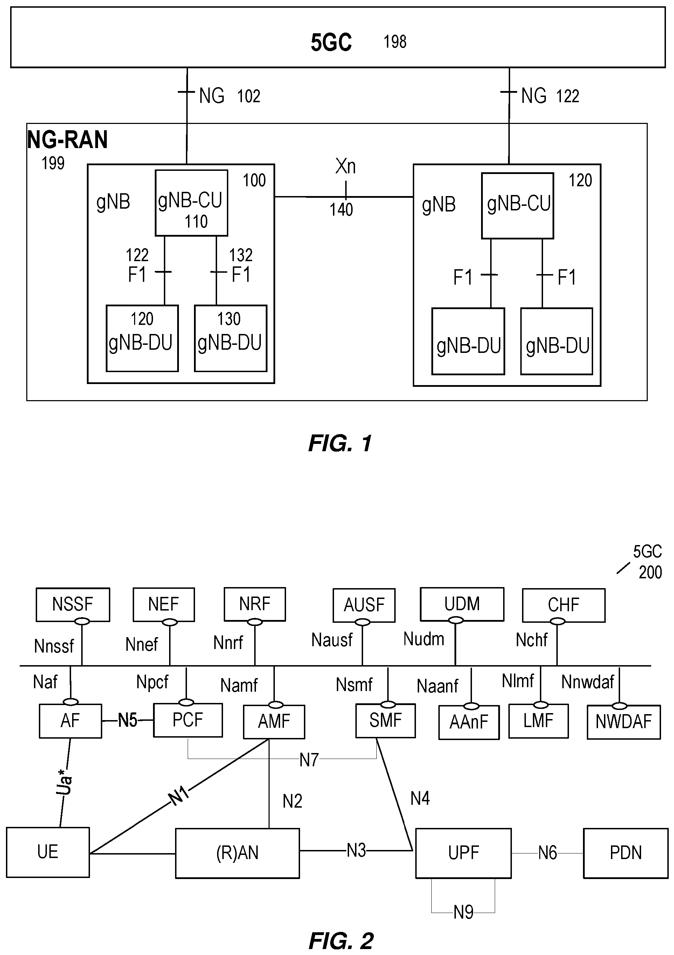

Figure 1 illustrates a high-level view of an exemplary 5G network architecture, consisting of a Next Generation Radio Access Network (NG-RAN) 199 and a 5G Core (5GC) 198. NG-RAN 199 can include one or more gNodeB's (gNBs) connected to the 5GC via one or more NG interfaces, such as gNBs 100, 150 connected via interfaces 102, 152, respectively. More specifically, gNBs 100, 150 can be connected to one or more Access and Mobility Management Functions (AMFs) in the 5GC 198 via respective NG-C interfaces. Similarly, gNBs 100, 150 can be connected to one or more User Plane Functions (UPFs) in 5GC 198 via respective NG-U interfaces. Various other network functions (NFs) can be included in the 5GC 198, as described in more detail below.

In addition, the gNBs can be connected to each other via one or more Xn interfaces, such as Xn interface 140 between gNBs 100 and 150. The radio technology for the NG-RAN is often referred to as "New Radio" (NR). With respect the NR interface to UEs, each of the gNBs can support frequency division duplexing (FDD), time division duplexing (TDD), or a combination thereof. Each of the gNBs can serve a geographic coverage area including one or more cells and, in some cases, can also use various directional beams to provide coverage in the respective cells.

NG-RAN 199 is layered into a Radio Network Layer (RNL) and a Transport Network Layer (TNL). The NG-RAN architecture, *i.e.,* the NG-RAN logical nodes and interfaces between them, is defined as part of the RNL. For each NG-RAN interface (NG, Xn, F1) the related TNL protocol and the functionality are specified. The TNL provides services for user plane transport and signaling transport. In some exemplary configurations, each gNB is connected to all 5GC nodes within an "AMF Region" with the term AMF being discussed in more detail below.

The NG RAN logical nodes shown in Figure 1 include a Central Unit (CU or gNB-CU) and one or more Distributed Units (DU or gNB-DU). For example, gNB 100 includes gNB-CU 110 and gNB-DUs 120 and 130. CUs (e.g., gNB-CU 110) are logical nodes that host higher-layer protocols and perform various gNB functions such controlling the operation of DUs. DUs *(e.g.,* gNB-DUs 120, 130) are decentralized logical nodes that host lower layer protocols and can include, depending on the functional split option, various subsets of the gNB functions. As such, CUs and DUs include various circuitry needed to perform their respective functions, including processing circuitry, transceiver and/or communication interface circuitry, power supply circuitry, etc.

A gNB-CU connects to one or more gNB-DUs over respective F1 logical interfaces, such as interfaces 122 and 132 shown in Figure 1. However, a gNB-DU can be connected to only a single gNB-CU. The gNB-CU and connected gNB-DU(s) are only visible to other gNBs and the 5GC as a gNB. In other words, the F1 interface is not visible beyond gNB-CU.

Each of the gNBs may include and/or be associated with a plurality of Transmission Reception Points (TRPs). Each TRP is typically an antenna array with one or more antenna elements and is located at a specific geographical location. In this manner, a gNB associated with multiple TRPs can transmit the same or different signals from each of the TRPs. For example, a gNB can transmit different version of the same signal on multiple TRPs to a single UE. Each of the TRPs can also employ beams for transmission and reception towards the UEs served by the gNB, as discussed above. In some embodiments, the TRPs may be associated with gNB-DUs.

Another change in 5G networks (e.g., in 5GC) is that traditional peer-to-peer interfaces and protocols found in earlier-generation networks are modified and/or replaced by a Service Based Architecture (SBA) in which Network Functions (NFs) provide one or more services to one or more service consumers. This can be done, for example, by Hyper Text Transfer Protocol/Representational State Transfer (HTTP/REST) application programming interfaces (APIs). In general, the various services are self-contained functionalities that can be changed and modified in an isolated manner without affecting other services.

Furthermore, the services are composed of various "service operations", which are more granular divisions of the overall service functionality. The interactions between service consumers and producers can be of the type "request/response" or "subscribe/notify". In the 5G SBA, network repository functions (NRF) allow every network function to discover the services offered by other network functions, and Data Storage Functions (DSF) allow every network function to store its context. This 5G SBA model is based on principles including modularity, reusability, and self-containment of NFs, which can enable network deployments to take advantage of the latest virtualization and software technologies.

3GPP Rel-17 enhances the SBA by adding a Data Management Framework that includes a Data Collection Coordination Function (DCCF) and a messaging framework. Data consumers ask DCCF for data collection in relation to a data producer. The DCCF subscribes to the data producer (if it does not have a subscription already) and then coordinates the request and data delivery using the messaging framework. The data producer inputs the requested data to the messaging framework, which delivers the data to the data consumer.

The prior art is, e.g., known from 3GPP TR 23700-91; 3rd Generation Partnership Project Technical Specification Group Services and System Aspects; Study on enablers for network automation for the 5G System (5GS); Phase 2 (Release 17).

### SUMMARY

Currently, however, there is no way for a data producer to ensure that a DCCF providing a subscription request can be trusted. As such, data producers cannot determine whether subscription requests are from an actual data consumer or are malicious requests intended to cause information leakage to unauthorized entities.

The invention is defined by the appended claims.

Accordingly, embodiments of the present disclosure address these and other problems, issues, and/or difficulties summarized above and described in more detail below, thereby enabling otherwise-advantageous deployment of DCCF-based data collection in 5G networks.

Some embodiments of the present disclosure include methods (e.g., procedures) performed by a data consumer network function (NF) of a communication network. These exemplary methods can be performed by various NFs and/or network nodes in the communication network (e.g., 5GC).

These exemplary methods can include sending a request to collect data produced by the communication network, wherein the request identifies the data to be collected. These exemplary methods can also include receiving a consumer message container that includes a data encryption key and a data integrity key that are encrypted by a public key associated with the data consumer NF. These exemplary methods can also include decrypting the data encryption key and the data integrity key using a private key associated with the data consumer NF. These exemplary methods can also include, using the data encryption key and the data integrity key, collecting the data from a data source NF of the communication network. In some embodiments, the data can be collected from the data source NF via a messaging framework associated with the DCCF.

In some embodiments, collecting the data can include receiving, from the data source NF, a message that includes the data to be collected and a message integrity code (MIC); decrypting the data using the data encryption key; and verifying the MIC using the data integrity key.

In some embodiments, the request to collect data can be sent to a DCCF of the communication network. In other embodiments, the consumer message container can be received from a network repository function (NRF) of the communication network together with an access token for a service provided by the DCCF, and the access token can be sent to the DCCF together with the request to collect the data.

In some embodiments, these exemplary methods can also include, after a duration of validity associated with the data encryption key and the data integrity key, receiving an updated consumer message container that includes an updated data encryption key and an updated data integrity key that are encrypted by the public key associated with the data consumer NF.

Other embodiments include exemplary methods (e.g., procedures) performed by a DCCF of a communication network (e.g., 5GC). These exemplary methods can include receiving, from a first data consumer NF of the communication network, a first request to collect data produced by the communication network, wherein the request identifies the data to be collected. These exemplary methods can also include obtaining the following first information from an NRF of the communication network:
- a first consumer message container that includes a data encryption key and a data integrity key that are encrypted by a public key associated with the first data consumer NF; and
- a data source message container that includes the data encryption key and the data integrity key that are encrypted by a public key associated with a source NF for the data to be collected.

These exemplary methods can also include sending, to the data source NF, a subscription request for the data to be collected, wherein the subscription request includes the data source message container and the access token. These exemplary methods can also include sending the first consumer message container to the first data consumer NF.

In some embodiments, the DCCF has no access to private keys, associated with the first data consumer NF and the data source NF, that can decrypt the first consumer message container and the data source message container. In some embodiments, the obtained first information can also include one of the following:
- an authorization result that indicates whether the first data consumer NF is authorized to access the data to be collected; or
- an access token for the first data consumer NF in relation to the data to be collected.
In some of these embodiments, the access token for the first data consumer NF can be sent to the first data consumer NF together with the first consumer message container.

In some embodiments, the obtained first information can also include an access token for the DCCF in relation to the data to be collected, and the access token for the DCCF can be sent to the data source NF together with the data source message container.

In some embodiments, these exemplary methods can also include, based on determining that the first data consumer NF is authorized to access the data to be collected, initializing a messaging framework associated with the DCCF to transport the data from the data source NF to the first data consumer NF.

In some embodiments, the first information can also include a duration of validity for the data encryption key and the data integrity key. In such embodiments, these exemplary methods can also include, after the duration of validity, obtaining the following second information from the NRF:
- an updated first consumer message container that includes an updated data encryption key and an updated data integrity key that are encrypted by the public key associated with the first data consumer NF; and
- an updated data source message container that includes the updated data encryption key and the updated data integrity key that are encrypted by the public key associated with the data source NF.
In such embodiments, these exemplary methods can also include sending the updated first consumer message container to the first data consumer NF and sending the updated data source message container to the data source NF.

In some embodiments, these exemplary methods can also include receiving, from a second data consumer NF of the communication network, a second request to collect data produced by the communication network. The second request identifies the same data to be collected as the first request. In such embodiments, these exemplary methods can also include obtaining, from the NRF, a second consumer message container that includes the data encryption key and the data integrity key that are encrypted by a public key associated with the second data consumer NF; and sending the second consumer message container to the second data consumer NF.

In some of these embodiments, one of the following can be obtained from the NRF together with the second consumer message container:
- an authorization result indicating whether the second data consumer NF is authorized to access the data to be collected; or
- an access token for the second data consumer NF in relation to the data to be collected.
In some variants, the access token for the second data consumer NF can be sent to the second data consumer NF together with the second consumer message container.

Other embodiments include methods (e.g., procedures) performed by an NRF of a communication network. These exemplary methods can include receiving a first authorization request for a first data consumer NF of the communication network to collect data produced by the communication network, wherein the first authorization request identifies the data to be collected. These exemplary methods can also include, based on determining that the first data consumer NF is authorized to access the data to be collected, sending the following first information to one or more NFs of the communication network:
- a first consumer message container that includes a data encryption key and a data integrity key that are encrypted by a public key associated with the first data consumer NF;
- a data source message container that includes the data encryption key and the data integrity key that are encrypted by a public key associated with a source NF for the data to be collected; and
- information indicating that the first data consumer NF is authorized to access the data to be collected.

In some embodiments, the information indicating that the first data consumer NF is authorized to access the data to be collected includes an authorization result (e.g., authorized/unauthorized) or an access token for the first data consumer NF in relation to the data to be collected. In some embodiments, the data source message container can be sent to the data source NF. In some embodiments, the first information can also include an access token for a DCCF in relation to the data to be collected.

In some embodiments, the first authorization request can be received from the DCCF while the first consumer message container, the access token for the DCCF, and the information indicating that the first data consumer NF is authorized to access the data to be collected can be sent to the DCCF. In other embodiments, the first authorization request can be received from the first data consumer NF while the first consumer message container, the access token for the DCCF, and the access token for the first data consumer NF can be sent to the first data consumer NF.

In some embodiments, these exemplary methods can also include receiving a second authorization request for a second data consumer NF of the communication network to collect data produced by the communication network. The second authorization request identifies the same data to be collected as the first authorization request. In such embodiments, these exemplary methods can also include, based on determining that the second data consumer NF is authorized to access the data to be collected, sending the following second information to one or more NFs of the communication network:
- a second consumer message container that includes the data encryption key and the data integrity key that are encrypted by a public key associated with the second data consumer NF; and
- information indicating that the second data consumer NF is authorized to access the data to be collected.

In some of these embodiments, the information indicating that the second data consumer NF is authorized to access the data to be collected can include an authorization result or an access token for the second data consumer NF in relation to the data to be collected. In some of these embodiments, the second information can include an access token for the DCCF in relation to the data to be collected.

Other embodiments include methods (e.g., procedures) performed by a data source NF of a communication network. These exemplary methods can be performed by various NFs and/or network nodes in the communication network (e.g., 5GC).

These exemplary methods can include receiving, from a DCCF of the communication network, a subscription request for data produced by the data source NF. The subscription request includes a data source message container that includes a data encryption key and a data integrity key that are encrypted by a public key associated with the data source NF. These exemplary methods can also include decrypting the data encryption key and the data integrity key using a private key associated with the data source NF. These exemplary methods can also include detecting an event that produces the data and, using the data encryption key and the data integrity key, providing the data to one or more data consumer NFs in the communication network.

In some embodiments, providing the data can include encrypting the data using the data encryption key; generating a MIC using the data integrity key; and sending, to a messaging framework associated with the DCCF, a message that includes the encrypted data and the MIC. In some embodiments, the subscription request can include an access token for the DCCF in relation to the data produced by the data source NF.

Other embodiments include data consumer NFs, DCCFs, NRFs, and data source NFs (or network nodes hosting the same) that are configured to perform the operations corresponding to any of the exemplary methods described herein. Other embodiments also include non-transitory, computer-readable media storing computer-executable instructions that, when executed by processing circuitry, configure such data consumer NFs, DCCFs, NRFs, and data source NFs to perform operations corresponding to any of the exemplary methods described herein.

These and other embodiments described herein can provide novel, flexible, and efficient techniques to protect data collected from Data Sources in the Data Management Framework against an untrusted DCCF. For example, embodiments can prevent unauthorized exposure of sensitive data collected within a 5G network, particularly when the DCCF is untrusted.

These and other objects, features, and advantages of the present disclosure will become apparent upon reading the following Detailed Description in view of the Drawings briefly described below.

### BRIEF DESCRIPTION OF THE DRAWINGS

Figures 1-2 illustrate various aspects of an exemplary 5G network architecture.
Figure 3 is a signal flow diagram illustrating a technique for token-based authorization for access to 5G NF services.
Figure 4 illustrates a high-level view of the 3GPP Rel-17 Data Management Framework.
Figure 5 is a flow diagram of a conventional procedure for a data consumer NF to obtain data from a data source NF in a 5G network via a DCCF.
Figures 6-7 are flow diagrams of exemplary procedures for a data consumer NF to obtain data from a data source NF in a 5G network via an untrusted DCCF, according to various embodiments of the present disclosure.
Figure 8 shows an exemplary method (*e.g.,* procedure) performed by a data consumer NF of a communication network, according to various embodiments of the present disclosure.
Figure 9 shows an exemplary method (*e.g.,* procedure) performed by a DCCF of a communication network, according to various embodiments of the present disclosure.
Figure 10 shows an exemplary method *(*e.g., procedure) performed by an NRF of a communication network, according to various embodiments of the present disclosure.
Figure 11 shows an exemplary method (*e.g.,* procedure) performed by a data source NF of a communication network, according to various embodiments of the present disclosure.
Figure 12 illustrates a wireless network, according to various embodiments of the present disclosure.
Figure 13 shows an embodiment of a UE, in accordance with various aspects described herein.
Figure 14 is a block diagram illustrating an exemplary virtualization environment usable for implementation of various embodiments of network nodes or NFs described herein.
Figures 15-16 are block diagrams of various exemplary communication systems and/or networks, according to various embodiments of the present disclosure.
Figures 17-20 are flow diagrams of exemplary methods (e.g., procedures) for transmission and/or reception of user data, according to various embodiments of the present disclosure.

### DETAILED DESCRIPTION

Embodiments briefly summarized above will now be described more fully with reference to the accompanying drawings. These descriptions are provided by way of example to explain the subject matter to those skilled in the art and should not be construed as limiting the scope of the subject matter to only the embodiments described herein. More specifically, examples are provided below that illustrate the operation of various embodiments according to the advantages discussed above.

Generally, all terms used herein are to be interpreted according to their ordinary meaning in the relevant technical field, unless a different meaning is clearly given and/or is implied from the context in which it is used. All references to alan/the element, apparatus, component, means, step, etc. are to be interpreted openly as referring to at least one instance of the element, apparatus, component, means, step, etc., unless explicitly stated otherwise. The steps of any methods and/or procedures disclosed herein do not have to be performed in the exact order disclosed, unless a step is explicitly described as following or preceding another step and/or where it is implicit that a step must follow or precede another step. Any feature of any of the embodiments disclosed herein can be applied to any other embodiment, wherever appropriate. Likewise, any advantage of any of the embodiments can apply to any other embodiments, and vice versa. Other objects, features and advantages of the disclosed embodiments will be apparent from the following description.

Furthermore, the following terms are used throughout the description given below:
- Radio Access Node: As used herein, a "radio access node" (or equivalently "radio network node," "radio access network node," or "RAN node") can be any node in a radio access network (RAN) of a cellular communications network that operates to wirelessly transmit and/or receive signals. Some examples of a radio access node include, but are not limited to, a base station (*e.g.,* a New Radio (NR) base station (gNB) in a 3GPP Fifth Generation (5G) NR network or an enhanced or evolved Node B (eNB) in a 3GPP LTE network), base station distributed components (*e.g.,* CU and DU), a high-power or macro base station, a low-power base station (*e.g.,* micro, pico, femto, or home base station, or the like), an integrated access backhaul (IAB) node (or component thereof such as MT or DU), a transmission point, a remote radio unit (RRU or RRH), and a relay node.
- Core Network Node: As used herein, a "core network node" is any type of node in a core network. Some examples of a core network node include, *e.g.,* a Mobility Management Entity (MME), a serving gateway (SGW), a Packet Data Network Gateway (P-GW), etc. A core network node can also be a node that implements a particular core network function (NF), such as an access and mobility management function (AMF), a session management function (AMF), a user plane function (UPF), a Service Capability Exposure Function (SCEF), or the like.
- Wireless Device: As used herein, a "wireless device" (or "WD" for short) is any type of device that has access to (*i.e.,* is served by) a cellular communications network by communicate wirelessly with network nodes and/or other wireless devices. Communicating wirelessly can involve transmitting and/or receiving wireless signals using electromagnetic waves, radio waves, infrared waves, and/or other types of signals suitable for conveying information through air. Unless otherwise noted, the term "wireless device" is used interchangeably herein with "user equipment" (or "UE" for short). Some examples of a wireless device include, but are not limited to, smart phones, mobile phones, cell phones, voice over IP (VoIP) phones, wireless local loop phones, desktop computers, personal digital assistants (PDAs), wireless cameras, gaming consoles or devices, music storage devices, playback appliances, wearable devices, wireless endpoints, mobile stations, tablets, laptops, laptop-embedded equipment (LEE), laptop-mounted equipment (LME), smart devices, wireless customer-premise equipment (CPE), mobile-type communication (MTC) devices, Internet-of-Things (IoT) devices, vehicle-mounted wireless terminal devices, mobile terminals (MTs), *etc.*
- Radio Node: As used herein, a "radio node" can be either a "radio access node" (or equivalent term) or a "wireless device."
- Network Node: As used herein, a "network node" is any node that is either part of the radio access network (*e.g.,* a radio access node or equivalent term) or of the core network (*e.g.,* a core network node discussed above) of a cellular communications network. Functionally, a network node is equipment capable, configured, arranged, and/or operable to communicate directly or indirectly with a wireless device and/or with other network nodes or equipment in the cellular communications network, to enable and/or provide wireless access to the wireless device, and/or to perform other functions (*e.g.,* administration) in the cellular communications network.
- Node: As used herein, the term "node" (without any prefix) can be any type of node that is capable of operating in or with a wireless network (including a RAN and/or a core network), including a radio access node (or equivalent term), core network node, or wireless device.
- Service: As used herein, the term "service" refers generally to a set of data, associated with one or more applications, which is to be transferred via a network with certain specific delivery requirements that need to be fulfilled in order to make the applications successful.
- Component: As used herein, the term "component" refers generally to any component needed for the delivery of a service. Examples of component are RANs (*e.g*., E-UTRAN, NG-RAN, or portions thereof such as eNBs, gNBs, base stations (BS), *etc*.)*,* CNs (*e.g.,* EPC, 5GC, or portions thereof, including all type of links between RAN and CN entities), and cloud infrastructure with related resources such as computation, storage. In general, each component can have a "manager", which is an entity that can collect historical information about utilization of resources as well as provide information about the current and the predicted future availability of resources associated with that component (*e.g.,* a RAN manager).

Note that the description given herein focuses on a 3GPP cellular communications system and, as such, 3GPP terminology or terminology similar to 3GPP terminology is generally used. However, the concepts disclosed herein are not limited to a 3GPP system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from the concepts, principles, and/or embodiments described herein.

In addition, functions and/or operations described herein as being performed by a wireless device or a network node may be distributed over a plurality of wireless devices and/or network nodes. Furthermore, although the term "cell" is used herein, it should be understood that (particularly with respect to 5G NR) beams may be used instead of cells and, as such, concepts described herein apply equally to both cells and beams.

As briefly mentioned above, currently there is no way for a data producer NF to ensure that a DCCF providing a subscription request can be trusted. As such, data producers cannot determine whether subscription requests are from an actual data consumer NF or are malicious requests intended to cause information leakage to unauthorized entities. This is discussed in more detail below after the following description of various features of the 5G SBA.

Figure 2 shows an exemplary non-roaming 5G reference architecture with service-based interfaces and various 3GPP-defined NFs within the Control Plane (CP). These include the following NFs that are part of, associated with, or interact with the 5GC (200):
- Application Function (AF, with Naf interface) interacts with the 5GC to provision information to the network operator and to subscribe to certain events happening in operator's network. An AF offers applications for which service is delivered in a different layer (i.e., transport layer) than the one in which the service has been requested (i.e., signaling layer), the control of flow resources according to what has been negotiated with the network. An AF communicates dynamic session information to PCF (via N5 interface), including description of media to be delivered by transport layer.
   - Policy Control Function (PCF, with Npcf interface) supports unified policy framework to govern the network behavior, via providing PCC rules (e.g., on the treatment of each service data flow that is under PCC control) to the SMF via the N7 reference point. PCF provides policy control decisions and flow based charging control, including service data flow detection, gating, QoS, and flow-based charging (except credit management) towards the SMF. The PCF receives session and media related information from the AF and informs the AF of traffic (or user) plane events.
- User Plane Function (UPF)- supports handling of user plane traffic based on the rules received from SMF, including packet inspection and different enforcement actions (e.g., event detection and reporting). UPFs communicate with the RAN (e.g., NG-RNA) via the N3 reference point, with SMFs (discussed below) via the N4 reference point, and with an external packet data network (PDN) via the N6 reference point. The N9 reference point is for communication between two UPFs.
   - Session Management Function (SMF, with Nsmf interface) interacts with the decoupled traffic (or user) plane, including creating, updating, and removing Protocol Data Unit (PDU) sessions and managing session context with the User Plane Function (UPF), e.g., for event reporting. For example, SMF performs data flow detection (based on filter definitions included in PCC rules), online and offline charging interactions, and policy enforcement.
   - Charging Function (CHF, with Nchf interface) is responsible for converged online charging and offline charging functionalities. It provides quota management (for online charging), re-authorization triggers, rating conditions, etc. and is notified about usage reports from the SMF. Quota management involves granting a specific number of units (e.g., bytes, seconds) for a service. CHF also interacts with billing systems.
- Access and Mobility Management Function (AMF, with Namf interface) terminates the RAN CP interface and handles all mobility and connection management of UEs (similar to MME in EPC). AMFs communicate with UEs via the N1 reference point and with the RAN (e.g., NG-RAN) via the N2 reference point.
   - Network Exposure Function (NEF) with Nnef interface - acts as the entry point into operator's network, by securely exposing to AFs the network capabilities and events provided by 3GPP NFs and by providing ways for the AF to securely provide information to 3GPP network. For example, NEF provides a service that allows an AF to provision specific subscription data (e.g., expected UE behavior) for various UEs.
   - Network Repository Function (NRF) with Nnrf interface - provides service registration and discovery, enabling NFs to identify appropriate services available from other NFs.
   - Network Slice Selection Function (NSSF) with Nnssf interface - a "network slice" is a logical partition of a 5G network that provides specific network capabilities and characteristics, e.g., in support of a particular service. A network slice instance is a set of NF instances and the required network resources (e.g., compute, storage, communication) that provide the capabilities and characteristics of the network slice. The NSSF enables other NFs (e.g., AMF) to identify a network slice instance that is appropriate for a UE's desired service.
   - Authentication Server Function (AUSF) with Nausf interface - based in a user's home network (HPLMN), it performs user authentication and computes security key materials for various purposes.
   - Network Data Analytics Function (NWDAF) with Nnwdaf interface - provides network analytics information (e.g., statistical information of past events and/or predictive information) to other NFs on a network slice instance level.
   - Location Management Function (LMF) with Nlmf interface - supports various functions related to determination of UE locations, including location determination for a UE and obtaining any of the following: DL location measurements or a location estimate from the UE; UL location measurements from the NG RAN; and non-UE associated assistance data from the NG RAN.

The Unified Data Management (UDM) function supports generation of 3GPP authentication credentials, user identification handling, access authorization based on subscription data, and other subscriber-related functions. To provide this functionality, the UDM uses subscription data (including authentication data) stored in the 5GC unified data repository (UDR). In addition to the UDM, the UDR supports storage and retrieval of policy data by the PCF, as well as storage and retrieval of application data by NEF.

The NRF allows every NF to discover the services offered by other NFs, and Data Storage Functions (DSF) allow every NF to store its context. In addition, the NEF provides exposure of capabilities and events of the 5GC to AFs within and outside of the 5GC. For example, NEF provides a service that allows an AF to provision specific subscription data (e.g., expected UE behavior) for various UEs.

Communication links between the UE and a 5G network (AN and CN) can be grouped in two different strata. The UE communicates with the CN over the Non-Access Stratum (NAS), and with the AN over the Access Stratum (AS). All the NAS communication takes place between the UE and the AMF via the NAS protocol (N1 interface in Figure 2). Security for the communications over this these strata is provided by the NAS protocol (for NAS) and the PDCP protocol (for AS).

Token-based authorization for the SBA is defined in 3GPP TS 33.501 (v16.5.0). This mechanism involves a consumer for a NF service (referred to as "NF Service Consumer" or more simply "Service Consumer") obtaining an access token for the service from an authorization server before accessing the service. Access tokens are JSON Web Tokens as described in RFC 7519 (published by IETF) and are secured with digital signatures or Message Authentication Codes (MAC) based on JSON Web Signature (JWS) as described in IETF RFC 7515.

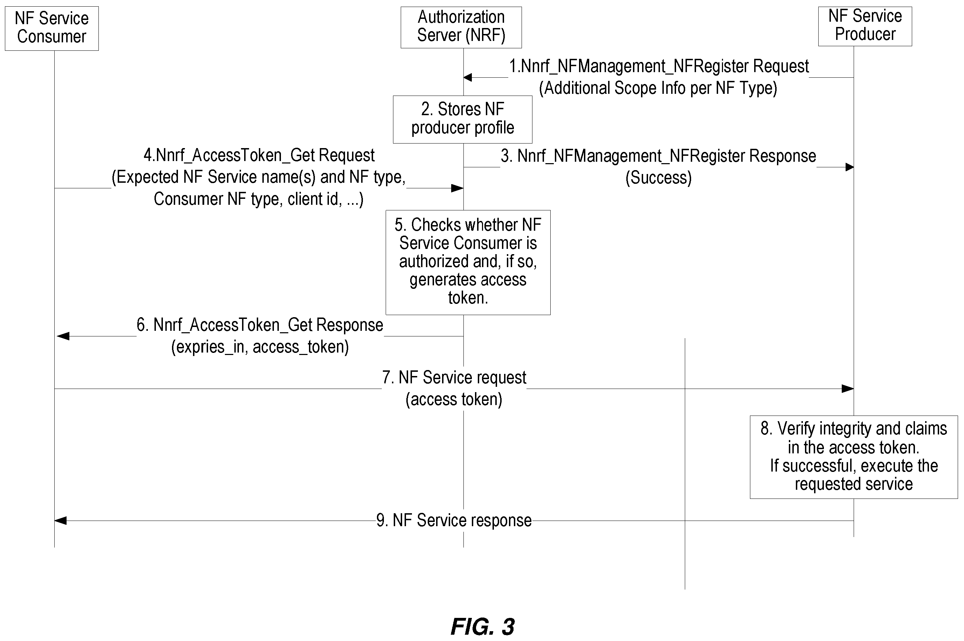

Figure 3 shows a signal flow diagram illustrating token-based authorization for access to NF services. Operations 1-3 are part of the NF Service registration procedure in which the NF Service Producer provides information about the NF Service to the NRF, which stores this information in a NF producer profile. The service information may identify resources and actions (or service operations) that are allowed for NF Service Consumers.

In operation 4, a NF Service Consumer requests an access token from the NRF using the *Nnrf_AccessToken_Get Request* operation. The message includes the NF Instance ID(s) of the NF Service Consumer, the requested "scope" including the expected NF Service name(s), optionally "additional scope" information (e.g., requested resources and requested service operations on the resources), and NF types of the expected NF Service Producer instance and of the NF Service Consumer.

In operation 5, the NRF checks whether the NF Service Consumer is authorized to access the requested service(s). If the NF Service Consumer is authorized, the NRF generates an access token with appropriate claims included. The NRF digitally signs the generated access token based on a shared secret or private key as described in RFC 7515. If the NF Service Consumer is not authorized, the NRF does not issue the access token. In operation 6, the NRF sends the access token to the NF Service Consumer in an *Nnrf_AccessToken_Get Response* operation.

In operation 7, the NF Service Consumer requests service from the NF Service Producer and includes the obtained access token. In operation 8, the NF Service Producer verifies the access token integrity and claims within the access token. If successful, the NF Service Producer provides the requested service to the NF Service Consumer in operation 9.

Indirect communication in SBA was specified in 3GPP Rel-16, using a Service Communication Proxy (SCP) as a standardized proxy between Service Consumers and Service Producers. With respect to token-based authorization, Rel-16 added the capability for the SCP to request access tokens on behalf of Service Consumers.

As mentioned above, 3GPP Rel-17 enhances the SBA by adding a Data Management Framework that includes a Data Collection Coordination Function (DCCF) and a messaging framework, which is defined in detail in 3GPP TR 23.700-91 (v17.0.0) section 6.9. The Data Management Framework is backward compatible with a Rel-16 NWDAF function, described above. For Rel-17, the baseline for services offered by the DCCF (e.g., to an NWDAF Analytics Function) are the Rel-16 NF Services used to obtain data. For example, the baseline for the DCCF service used by an NWDAF consumer to obtain UE mobility data is *Namf_EventExposure.*

A Rel-16 NWDAF can coexist with a Rel-17 NWDAF and the Data Management Framework. A Rel-16 NWDAF continues to request data directly from NFs without using the Data Management Framework and provides analytics to consumers that discover the Rel-16 NWDAF. A Rel-17 NWDAF can request data from the Data Management Framework, and if the data is not collected already, the Data Management Framework would request the data from a data source. In other words, a data source would independently send Data to the Rel-16 NWDAF that sent a request directly to the Data Source, and to the Data Management Framework that sent a request for the Rel-17 NWDAF.

In Rel-17, the NWDAF is decomposed by moving Data Collection, including the task of identifying the Data Source, to the Data Management Framework. The Rel-17 NWDAF requests data from the Data Management Framework but may not query other NFs (e.g., NRF, UDM, etc.) to determine which NF instance serves a UE, nor need it be concerned about life cycles of Data Source NFs, as was the case for Rel-16 NWDAF. This decomposition also allows other NFs to obtain data via the Data Management Framework and avoids duplicate data collection from the same Data Source. The Rel-17 NWDAF (without Data Collection) may be referred to as the "NWDAF Analytics Function."

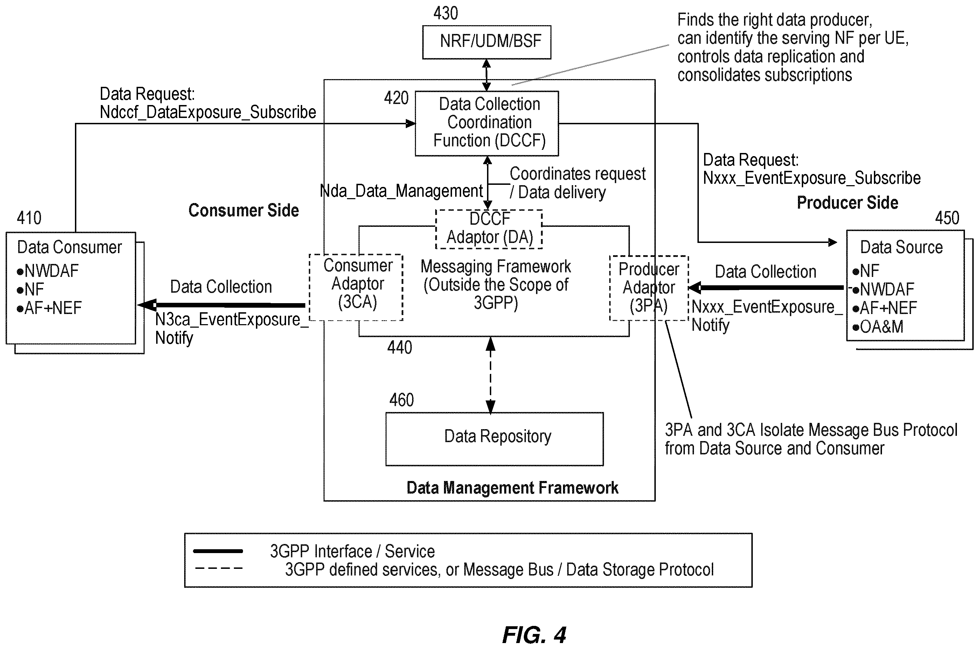

Figure 4 illustrates a high-level view of the Rel-17 Data Management Framework. The main components are the DCCF (420) which communicates with other NFs; the Messaging Framework (440), which is outside the scope of 3GPP standardization; and a Data Repository (460). The DCCF optionally includes a DCCF Adaptor (DA) used to communicate with the Messaging Framework, which optionally includes a Consumer Adaptor (3CA) and/or a Producer Adaptor (3PA) used to communicate with a Data Consumer and a Data Source, respectively. The DA, 3CA, and 3PA may be standalone or combined with DCCF, Data Consumer (410), and Data Source (450), respectively. If standalone 3PAs and 3CAs are used, DCCF maintains (NF, 3PA) and (NF, 3CA) associations.

Exemplary Data Consumer NFs include, but are not limited to, the NWDAF. The Data Management Framework is compatible with both a 3GPP-defined Data Repository Function for ML/Analytics and Data Repositories that are not 3GPP-defined.

The DCCF is a control-plane function that coordinates data collection and triggers data delivery to Data Consumers. A DCCF may support multiple Data Sources, Data Consumers, and Message Frameworks. However, to prevent duplicate data collection, each Data Source is associated with only one DCCF. DCCF provides the 3GPP defined *Ndccf_DataExposure* Service to Data Consumers and uses the services of Data Sources to obtain data. Although Figure 3 shows one DCCF for the 5GC, there can be multiple instances of the DCCF, e.g., for different network slices, different geographic regions where Data Sources reside, or different Data Source types.

For DCCF discovery, the DCCF registers with the NRF (430) and is discovered by Consumers or an SCP using the registration and discovery procedures defined for the NF Service Framework in 3GPP TS 23.502 (v16.7.0). The DCCF profile in the NRF may specify:
- Slices (S-NSSAIs) that a DCCF supports;
- Source Types that a DCCF coordinates: and
- Serving area (e.g., list of TAIs) containing Data Sources that a DCCF coordinates.
Source Type may be an NF Type (e.g., SMF, AMF, etc.) or a domain (e.g., OA&M). Hence a Consumer or SCP may request or select a DCCF according to the type of information it is requesting, the network slices it supports, and/or its serving area.

In general, a DCCF is aware of the Data Sources that it coordinates. NRF and UDM can provide the DCCF with the identity of 5GC Data Sources (e.g., an AMF serving a UE). The DCCF also hides Data Source life cycle events and changes of entity serving a UE from the Data Consumer. For example, if a UE's serving NF Data Source changes because of a life-cycle event, the NRF may notify a DCCF that has previously subscribed to NRF event notifications. The DCCF may also use the UDM to learn the new (UE, NF) association, thus making the change of the NF serving a UE transparent to the Data Consumer.

The NWDAF acting as "Data Source" supplies Analytics output as "Data", using the services defined in 3GPP TS 23.288 (v16.6.0) section 7 (subscribe/notify), similar to other NFs. DCCF is not intended to support aggregation of analytics data across multiple NWDAFs. However, DCCF keeps track of Consumer Requests to the NWDAF (acting as a "Data Source") and thus knows which analytics are produced by an NWDAF. Therefore, the Data Management Framework can be used by any NF (e.g., an NWDAF) that consumes (or aggregates) analytics data from one or more NWDAFs acting as a "Data Source" or from the Data Repository.

A DCCF receives data requests from Data Consumers via the *Ndccf_DataExposure* service. If a Data Source is not specified in the Data Request, the DCCF determines the Data Source that can provide the data requested by the Data Consumer (e.g., an event requested by the Data Consumer for NF event exposure). For example, if the request is for UE-specific data, the DCCF may query the other NFs (e.g., NRF, UDM, etc.) to determine which NF instance is serving the UE. If the Data Source is specified in the Data Request (e.g., the Data Consumer is configured with Data Sources), the DCCF checks whether the data is already collected from the Data Source. If not, will request the data from the specified Data Source.

Additionally, the DCCF may determine if the requested data is currently being produced by any Data Source and being provided to the Messaging Framework. If the requested data is not being produced and/or provided, the DCCF sends a new subscription/request towards the Data Source to trigger a new data collection, and the DCCF then subscribes with the messaging framework for the Data Consumer to receive future notifications associated with the desired Data Source. Similarly, when the last Data Consumer of specific data no longer wants that data, the DCCF cancels data collection from the Data Source and from the Messaging Framework. This ensures that the Data Source is only producing the same data once for multiple Data Consumers and is not producing data that no Data Consumer needs.

The DCCF determines if data is already being collected based on maintaining a record of previous requests it made for data (e.g., via an *Nnf_EventExposure* service offered by the Data Source). If parameters in a previous request for data match those that are needed in a subsequent request, the DCCF may determine that the requested data is already being collected. The DCCF may then subscribe with the messaging framework for the new Consumer to receive future notifications.

Formatting conditions and processing instructions requested by Data Consumers via the *Ndccf_DataExposure* service may be passed to the Messaging Framework via *Nda_Data_Management* service. The 3CA may then send notifications to the Data Consumers. Formatting conditions determine when a notification is sent to a Data Consumer and may include:
- Notification Event clubbing (buffering and sending of several notifications in one message).
- Notification Time Window (e.g.: notifications are buffered and sent between 2 and 3 AM).
- Cross event reference-based notification (when a subscribing NF is subscribing to multiple events (e.g.: event X and event Y) the notification for an Event-X is buffered and reported only when the Event-Y occurs).
- Consumer triggered Notification.
- Exact time-based Notification without the event (e.g., data is reported at an exact time, such as every 30 minutes, regardless of whether an event occurs).
- Calculation-based Notification (e.g., exponential time window: first notification sent after 5 min, second notification sent after 10 min, third notification sent after 15 min, etc.).

Processing instructions allow summarizing of notifications at 3CA to reduce volume of data reported from the 3CA to a Data Consumer. This is particularly useful when data from a Data Repository (e.g., historical data) is requested that includes a large number of notifications. The type of processing is specified by the consumer and may result in joining the information from multiple notifications into a common report.

When the DCCF receives a request for historical data (e.g., NWDAF requesting analytics previously generated by another NWDAF), the DCCF may trigger retrieval of the data from the Data Repository and make it available over the messaging framework.

The Messaging Framework is not expected to be standardized by 3GPP. It contains Messaging Infrastructure that propagates event information and data (e.g.: streaming and notifications) from Data Sources to Data Consumers. The Messaging Framework may support the "pub-sub" pattern, in which data is published by producer adaptors (or Data Source if the Data Source natively supports the message bus protocol) and can be subscribed to by consumer adaptor (or Data Consumer if the Data Consumer natively supports the message bus protocol).

The Messaging Framework may support multiple event delivery mechanisms such as best effort or guaranteed delivery. The Messaging Framework may contain one or more Adaptors that translate between 3GPP defined protocols (e.g., Rel-16 *Nnwdaf_AnalyticsSubscription_Notify*) and a Data Forwarding Protocol not specified by 3GPP. The Messaging Framework adaptors maintain subscription information, including formatting conditions and processing instructions received by the DA.

The adaptor on the Data Producer side (3PA) allows any source data (e.g., from Rel-16 OA&M or NF EventExposure) to be distributed via the framework without impact on the Data Source. The DCCF keeps track on the Adaptor instances. An Adaptor may be associated with specific NF types, manage one or more data Sources, and may be provisioned on the DCCF together with the Data Sources it supports. If the Messaging Framework directly supports 3GPP interfaces, adaptors may not be required.

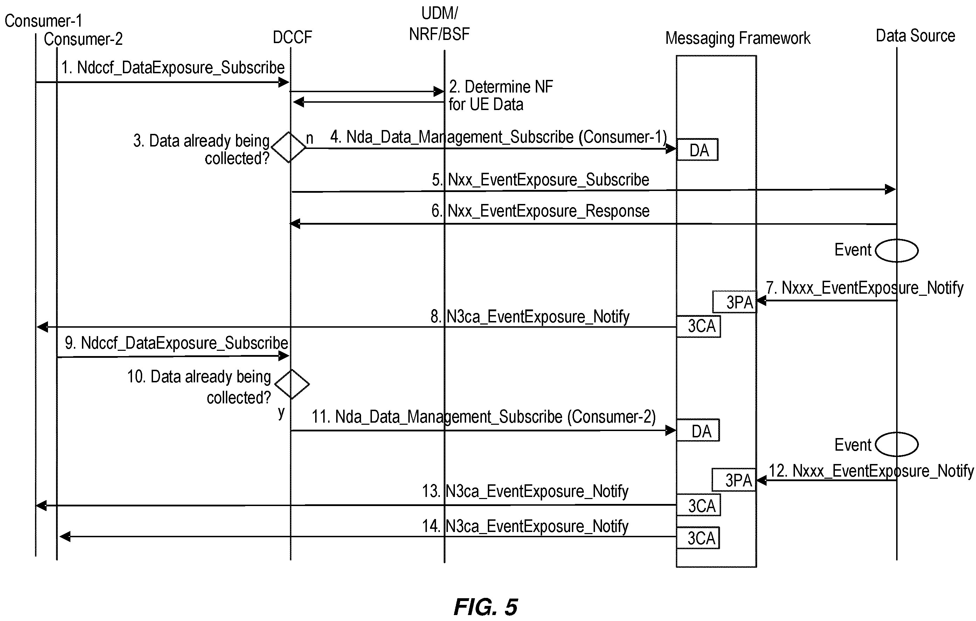

Figure 5 shows a signal flow diagram of an exemplary procedure for data collection and distribution for event notifications using the DCCF and Messaging Framework. The procedure further illustrates how the DCCF manages Data Sources such that data is produced only once and how the DCCF interacts with the Messaging Framework to distribute data to all subscribed Data Consumers. The procedure applies for consumers and producers using 3CA and 3PA.

Data handled by the Messaging Framework is associated with an identifier. The example procedure in Figure 5 assumes that the Messaging Framework uses a pub/sub model based on "Data Tags" (e.g., a "Topic" in some message framework protocols). The 3PA can publish to a "Data Tag" and a 3CA that wants to receive the data subscribes to the "Data Tag". Other options can also be supported.

Although the operations shown in Figure 5 are given numerical labels, this intended to facilitate explanation rather than to require or imply a particular order of the operations, unless specifically noted otherwise in the description below.

In operation 1, Data Consumer-1 (e.g., NWDAF-1, also referred to as "Consumer-1") sends a request for data to the DCCF. The request includes the Notification Target Address. The request may indicate whether the requested data should be sent to the Notification Target Address set to Consumer-1 and/or to other Data Consumers such as Data Repository. The Notification Correlation ID of Consumer-1 is included in the request and can be used for notifications sent to Consumer-1 (e.g., in operation 8, described below).

In operation 2, If the request is for UE data, the DCCF may query the UDM/NRF/BSF to determine the NF serving the UE. In operation 3, the DCCF determines the Data Source (e.g., AMF-1) that can provide the data and checks that the requested data is not already being collected. In operation 4, the DCCF controls the message bus and the adaptors, so the notifications traverse the Messaging Framework. The subscription to the DA includes a Notification Correlation ID of the 3PA and the Notification Correlation ID for Consumer-1 as received in step 1. The DA may associate these with a Messaging Framework. The 3PA is provided with its Notification Correlation ID and the "Data Tag". The 3CA can be provided with Consumer-1's notification endpoint, the Notification_Correlation_ID of Consumer-1, and the "Data Tag". The 3CA may then subscribe to the "Data Tag" in the Messaging Framework.

In operation 5, the DCCF sends a subscription request to a NF producer acting as a Data Source. The subscription includes the notification endpoint and Notification Correlation ID of the 3PA that is acting as the receiver for these notifications. In operation 6, the Data Source acknowledges the request received in operation 5. In operation 7, a notification containing the Notification Correlation ID of the 3PA is sent to the 3PA after an event trigger at the Data Source. The 3PA publishes the data in the Messaging Framework, possibly using the "Data Tag" associated with the Notification Correlation ID of the 3PA received in operation 4.

In operation 8, when the data is published to the "Data Tag", the Messaging Framework makes it available to all subscribed 3CAs. In the scenario shown in Figure 5, the only subscriber is a 3CA serving Consumer-1. This 3CA maps the "Data Tag" to the Notification Correlation ID of Consumer-1 that was received in operation 4 (originally provided by Consumer-1) and sends the notification to the notification endpoint of Consumer-1.

In operation 9, Consumer-2 (e.g., NWDAF-2) sends a request for the same data as requested by Consumer-1 in operation 1. The request may indicate whether the requested data should be sent to Consumer-2, and/or to other Consumers such as Data Repository. The Notification Correlation ID of Consumer-2 is included for notifications sent to Consumer-2. In operation 10, the DCCF determines that the requested data is already being collected from a Data Source (e.g., AMF-1) and retrieves 3PA ID and the Notification Correlation ID of the 3PA.

In operation 11, the DCCF sends a subscription request to the Messaging Framework indicating that there is a new subscriber for the data. The subscribe message to the DA provides the 3PA ID, the 3PA Notification Correlation ID currently in use, and the Notification Correlation ID for Consumer-2 as received in operation 9. The DA selects the existing "Data Tag" corresponding to the 3PA information and sends the 3CA Consumer-2's notification endpoint, the Notification_Correlation_ID of Consumer-2, and the "Data Tag". The 3CA may then subscribe to the "Data Tag" in the Messaging Framework.

In operation 12, after an event is triggered in the Data Source, a Notification is sent to the 3PA and 3PA publishes the data to the corresponding "Data Tag" on the Messaging Framework. In operations 13-14, when the data is published to the "Data Tag", the Messaging Framework makes it available to the subscribed 3CAs. In this scenario, the 3CAs for Consumer-1 and Consumer-2 receive the data and send the notifications to the notification endpoints using the Notification Correlation ID of Consumer-1 and Consumer-2, respectively. A Data Repository also receives notifications if it has subscribed via the DCCF.

In the procedure shown in Figure 5, the DCCF makes a legitimate subscription request to a Data Source (e.g., operation 5) on behalf of an authorized Data Consumer (i.e., Consumer-1). Currently, however, there is no way for a Data Source to determine if a DCCF subscription request is legitimate and/or authorized, or if the request is malicious with intent to obtain information by (or on behalf of) unauthorized entities. Put more simply, there is no way for a Data Source to determine whether the requesting DCCF is trusted or untrusted.

Embodiments of the present disclosure address these and other problems, issues, and/or difficulties by providing novel, flexible, and efficient techniques to protect data collected from Data Sources in the Data Management Framework against an untrusted DCCF. In these exemplary techniques, an NRF provides symmetric keys for encryption and integrity to protect the collected data and sends key pairs to a Data Consumer and a Data Source using their public keys, either directly or via the DCCF. These techniques provide a security mechanism to prevent unauthorized exposure of sensitive data collected within a 5G network, particularly when the DCCF is untrusted.

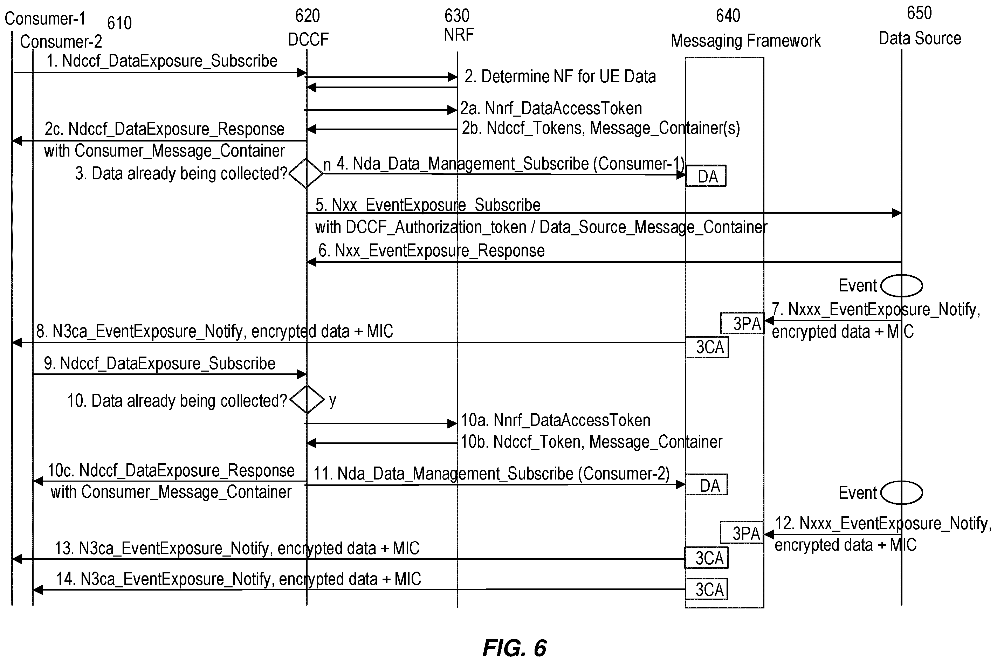

Figure 6 shows a signal flow diagram of an exemplary procedure for data collection and distribution for event notifications using an untrusted DCCF and Messaging Framework, according to various embodiments of the present disclosure. In particular, Figure 6 shows a two Data Consumers (610), an NRF (630, which also may include UDM and/or BSF functionality), a DCCF (620), a Messaging Framework (640), and a Data Source (650). The entities shown in Figure 6 are the same as those shown in Figure 5, discussed above. Although the operations shown in Figure 6 are given numerical labels, this intended to facilitate explanation rather than to require or imply a numerical order of the operations, unless specifically noted otherwise in the description below.

In operation 1, Data Consumer-1 (e.g., NWDAF-1, also referred to as "Consumer-1") sends a request for data to the DCCF. The request includes the Notification Target Address. The request may indicate whether the requested data should be sent to the Notification Target Address set to Consumer-1 and/or to other Data Consumers such as Data Repository. The Notification Correlation ID of Consumer-1 is included in the request and can be used for notifications sent to Consumer-1 (e.g., in operation 8, described below). Additionally, in the request sent in operation 1, Consumer-1 includes a request for a Token/Message Container from the NRF for the purpose of data collection.

In operation 2, If the request is for UE data, the DCCF may query the UDM/NRF/BSF to determine the NF serving the UE. In operation 2a, the DCCF requests from NRF two access tokens: a first access token for the determined Data Source on behalf of Consumer-1, and a second access token for the DCCF to authorize itself to the Data Source. In some cases, it may be unnecessary for the DCCF to request an access token from the NRF to authorize Consumer-1. Rather, the DCCF can query the authorization of Consumer-1 from NRF, which can provide the authorization result directly rather than providing any access token for Consumer-1.

In operation 2b, the NRF performs authorization of the DCCF and Consumer-1. If authorization is successful, the NRF generates and stores keys for encryption and integrity for collection of the requested data collection since the keys do not already exist for the requested data. Then the NRF generates and sends the following to the DCCF:
- access token for the DCCF (DCCF_Authorization_token);
- access token (alternately authorization result) for Consumer-1;
- message container for Consumer-1 (Consumer_Message_Container), which includes data encryption key *K_{E}* and data integrity key *K_{I}* in encrypted form using the public key (PK) of Consumer-1 and the key identifiers. This message container is signed by the NRF using its private key;
- message container for the Data Source (Data_Source_Message_Container), which includes data encryption key *K_{E}* and data integrity key *K_{I}* in encrypted form using the PK(s) of the Data Source(s) and the key identifiers, in the case that the *K_{E}* and the *K_{I}* have not been previously distributed to the Data Source(s). This message container is signed by the NRF using its private key;
- Information that when the keys should be renewed or invalid (optional).
Note that the NRF stores which data consumers access which data. In case of key updates, the NRF generates and provides to DCCF updated message containers including new encrypted key pairs, using PKs of data consumers and data sources. The DCCF distributes the message containers to the relevant data consumers and data sources.

In operation 2c, the DCCF sends the Consumer_Message_Container to Consumer-1. In operation 3, the DCCF determines the Data Source (e.g., AMF-1) that can provide the data and checks that the requested data is not already being collected. In operation 4, the DCCF controls the message bus and the adaptors, so the notifications traverse the Messaging Framework. The subscription to the DA includes a Notification Correlation ID of the 3PA and the Notification Correlation ID for Consumer-1 as received in step 1. The DA may associate these with a Messaging Framework. The 3PA is provided with its Notification Correlation ID and the "Data Tag". The 3CA can be provided with Consumer-1's notification endpoint, the Notification_Correlation_ID of Consumer-1, and the "Data Tag". The 3CA may then subscribe to the "Data Tag" in the Messaging Framework.

In operation 5, the DCCF sends a subscription request to a NF producer acting as a Data Source. The subscription includes the notification endpoint and Notification Correlation ID of the 3PA that is acting as the receiver for these notifications. The request also includes the DCCF_Authorization_token and the Data_Source_Message_Container that were received in operation 2b.

In operation 6, the Data Source acknowledges the request received in operation 5. In operation 7, the Data Source sends a notification containing the Notification Correlation ID of the 3PA to the 3PA after an event trigger at the Data Source. The 3PA publishes the data in the Messaging Framework, possibly using the "Data Tag" associated with the Notification Correlation ID of the 3PA received in operation 4. The data is encrypted by the Data Source using K_{E} and a MIC (Message Integrity Code) based on K_{I} should also be included in the message. The keys K_{E} and Ki are retrieved by decrypting Data_Source_Message_Container received in operation 5.

In operation 8, when the data is published to the "Data Tag", the Messaging Framework makes it available to all subscribed 3CAs. In the scenario shown in Figure 6, the only subscriber is a 3CA serving Consumer-1. This 3CA maps the "Data Tag" to the Notification Correlation ID of Consumer-1 that was received in operation 4 (originally provided by Consumer-1) and sends the notification to the notification endpoint of Consumer-1. When Consumer-1 receives the data, it will check the data integrity and decrypt the data using the key pairs received from the NRF in the Consumer_Message_Container (operation 2c).

In operation 9, Consumer-2 (e.g., NWDAF-2) sends a request for the same data as requested by Consumer-1 in operation 1. The request may indicate whether the requested data should be sent to Consumer-2, and/or to other Consumers such as Data Repository. The Notification Correlation ID of Consumer-2 is included for notifications sent to Consumer-2. In operation 10, the DCCF determines that the requested data is already being collected from a Data Source (e.g., AMF-1) and retrieves 3PA ID and the Notification Correlation ID of the 3PA.

In operation 10a, the DCCF requests from NRF a first access token for the determined Data Source on behalf of Consumer-2. Due to the token provided in operation 5, the DCCF does not need to request a second access token to authorize itself to the Data Source, as done in operation 2a discussed above. In some cases, it may be unnecessary for the DCCF to request an access token from the NRF to authorize Consumer-2. Rather, the DCCF can query the authorization of Consumer-2 from NRF, which can provide the authorization result directly rather than providing any access token for Consumer-2.

In operation 10b, the NRF performs authorization of Consumer-2. If authorization is successful, the NRF fetches the keys for encryption and integrity for collection of the requested data collection, which were previously stored in conjunction with operation 2b. Then the NRF generates and sends the following to the DCCF:
- access token (alternately authorization result) for Consumer-2;
- message container for Consumer-2 (Consumer_Message_Container), which includes data encryption key *K_{E}* and data integrity key *K_{I}* in encrypted form using the public key (PK) of Consumer-2 and the key identifiers. This message container is signed by the NRF using its private key;
- information that when the keys should be renewed or invalid (optional).

In operation 10c, the DCCF sends the Consumer_Message_Container to Consumer-2. The keys in the message container are the same as operation 2c since Consumer-2 requests the same data as Consumer-1. Operation 11 is substantially identical to operation 11 shown in Figure 5, discussed above. Note, however, that the 3CA for Consumer-2 may be different or the same than the 3CA for Consumer-1.

In operation 12, after an event is triggered in the Data Source, a Notification is sent to the 3PA and 3PA publishes the data to the corresponding "Data Tag" on the Messaging Framework. The data is encrypted by the Data Source using K_{E} and a MIC (Message Integrity Code) based on Ki should also be included in the message. The keys K_{E} and Ki are retrieved by decrypting Data_Source_Message_Container received in operation 5.

In operations 13-14, when the data is published to the "Data Tag", the Messaging Framework makes it available to the subscribed 3CAs. In this scenario, the 3CAs for Consumer-1 and Consumer-2 receive the data and send the notifications to the notification endpoints using the Notification Correlation ID of Consumer-1 and Consumer-2, respectively. When Consumer-1 and Consumer-2 receive the data, they will check the data integrity and decrypt the data in the manner described above for operation 8.

Although not shown in Figure 6, when the NRF provides the keys K_{E} and K_{I}, it can also maintain a timer for renewing the keys. In such case, when NRF decides to renew the keys, it will send to the DCCF message containers with the new keys to be distributed to the subscribed data consumers and to the data source.

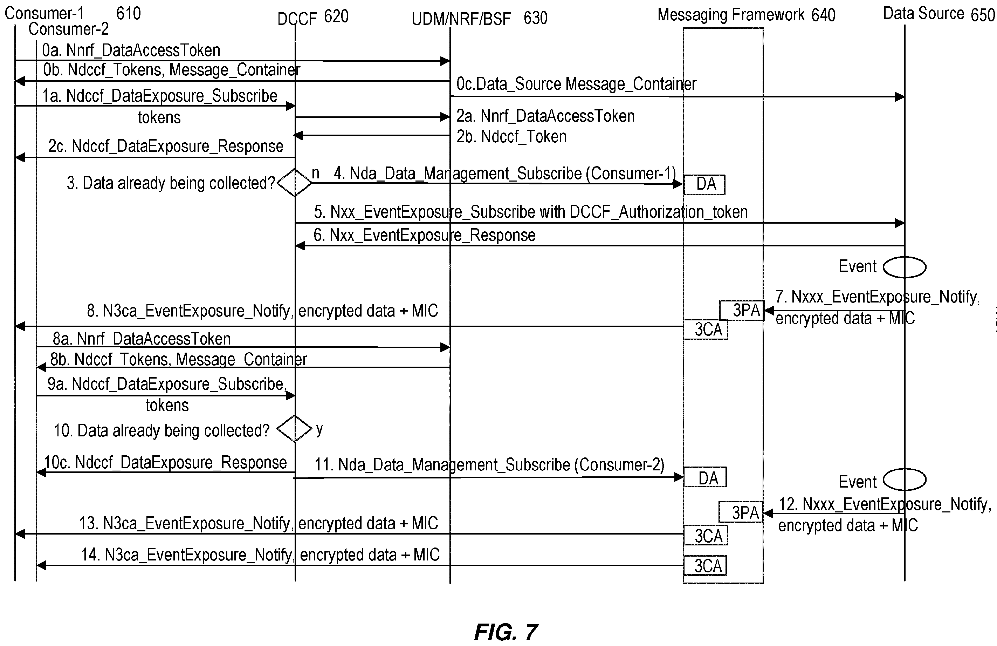

Figure 7 shows a signal flow diagram of another exemplary procedure for data collection and distribution for event notifications using an untrusted DCCF and Messaging Framework, according to other embodiments of the present disclosure. The entities shown in Figure 7 are the same as those shown in Figure 6, discussed above. Although the operations shown in Figure 6 are given numerical labels, this intended to facilitate explanation rather than to require or imply a numerical order of the operations, unless specifically noted otherwise in the description below. For the sake of brevity, descriptions are omitted for operations in Figure 7 that are the same as or substantially similar to operations described above in relation to Figure 6.

In the embodiments illustrated by Figure 7, data consumers (e.g., Consumer-1 and Consumer-2) can request and receive a Token/Message Container directly from the NRF rather than via the DCCF (e.g., operations 0a-b or 8a-b). The NRF performs authorization of the data consumer (e.g., Consumer-1 or Consumer-2) and, if authorization is successful, generates and stores keys for encryption and integrity for collection of the requested data collection (if such keys do not already exist). Then the NRF generates the access token and signed message container that includes the key pair encrypted with the PK of the data consumer (e.g., Consumer-1 or Consumer-2). The NRF sends the access token and the Consumer_Message_Container directly to Consumer-1 (operation 0b) or Consumer-2 (operation 8b) instead of via the DCCF. The data consumer then sends the received access token to the DCCF for the authorization purposes (e.g., operation 1a or 9a).

In some embodiments, the NRF can send the Data_Source_Message_Container to the Data Source directly rather than via the DCCF. In this scenario, the Data_Source_Message_Container will not be included in the message of operation 2b, but an additional operation (e.g., operation 0c) can be included for the NRF to send the Data_Source_Message_Container to the Data Source.

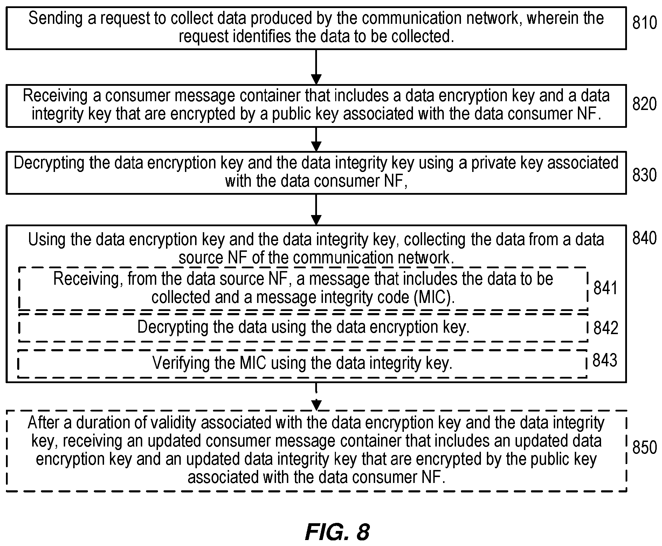

These embodiments described above can be further illustrated with reference to Figures 8-11, which depict exemplary methods (*e.g.,* procedures) performed by a data consumer NF, a DCCF, an NRF, and a data source NF, respectively. Put differently, various features of the operations described below correspond to various embodiments described above. The exemplary methods shown in Figures 8-11 can be used cooperatively (e.g., with each other and with other procedures described herein) to provide benefits, advantages, and/or solutions to problems described herein. Although the exemplary methods are illustrated in Figures 8-11 by specific blocks in particular orders, the operations corresponding to the blocks can be performed in different orders than shown and can be combined and/or divided into blocks or operations having different functionality than shown. Optional blocks and/or operations are indicated by dashed lines.

In particular, Figure 8 illustrates an exemplary method (*e.g.,* procedure) performed by a data consumer NF, of a communication network (e.g., 5GC), according to various embodiments of the present disclosure. The exemplary method shown in Figure 8 can be performed by various NFs and/or network nodes described elsewhere herein.

The exemplary method can include the operations of block 810, where the data consumer NF can send a request to collect data produced by the communication network, wherein the request identifies the data to be collected. The exemplary method can also include the operations of block 820, where the data consumer NF can receive a consumer message container that includes a data encryption key and a data integrity key that are encrypted by a public key associated with the data consumer NF. The exemplary method can also include the operations of block 830, where the data consumer NF can decrypt the data encryption key and the data integrity key using a private key associated with the data consumer NF. The exemplary method can also include the operations of block 840, where the data consumer NF can, using the data encryption key and the data integrity key, collect the data from a data source NF of the communication network. In some embodiments, the data can be collected from the data source NF via a messaging framework (e.g., 640 in Figures 6-7) associated with the DCCF.

In some embodiments, the collecting operations of block 840 can include the operations of sub-blocks 841-843. In sub-block 841, the data consumer NF can receive, from the data source NF, a message that includes the data to be collected and a message integrity code (MIC). In sub-block 842, the data consumer NF can decrypt the data using the data encryption key. In sub-block 843, the data consumer NF can verify the MIC using the data integrity key.

In some embodiments, the request to collect data can be sent (e.g., in block 810) to a DCCF of the communication network. These embodiments are exemplified by Figure 6.

In other embodiments, the consumer message container can be received (e.g., in block 820) from an NRF of the communication network together with an access token for a service provided by the DCCF, and the access token can be sent to the DCCF (e.g., in block 810) together with the request to collect the data. These embodiments are exemplified by Figure 7.

In some embodiments, the exemplary method can also include the operations of block 850, where the data consumer NF can, after a duration of validity associated with the data encryption key and the data integrity key, receive an updated consumer message container that includes an updated data encryption key and an updated data integrity key that are encrypted by the public key associated with the data consumer NF.

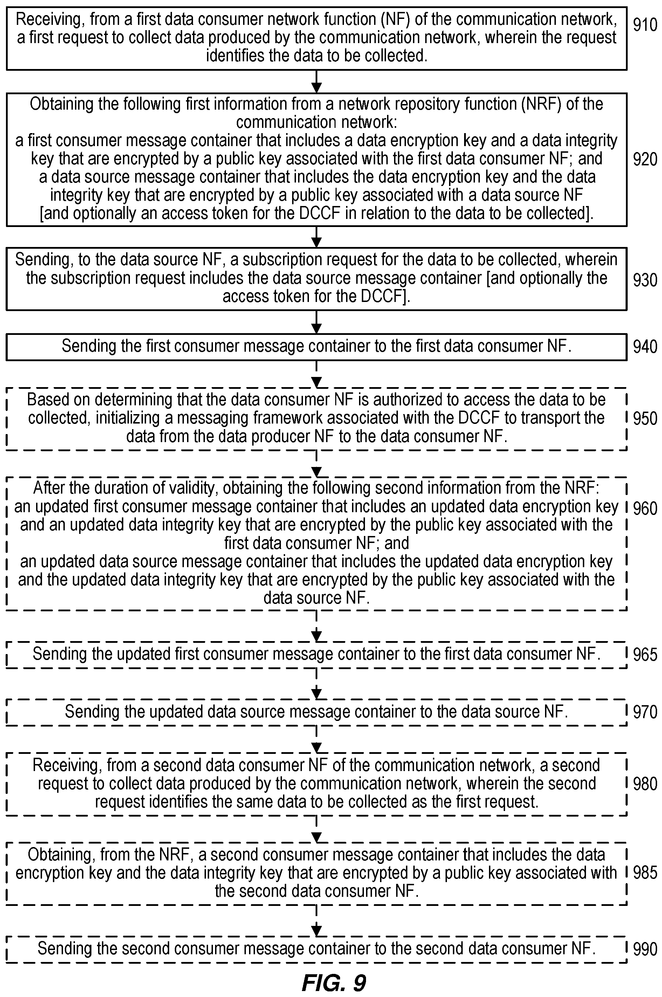

In addition, Figure 9 illustrates an exemplary method (*e.g.,* procedure) performed by a DCCF of a communication network (e.g., 5GC), according to various embodiments of the present disclosure. The exemplary method shown in Figure 9 can be performed by a DCCF such as described elsewhere herein.

The exemplary method can include the operations of block 910, where the DCCF can receive, from a first data consumer NF of the communication network, a first request to collect data produced by the communication network, wherein the request identifies the data to be collected. The exemplary method can also include the operations of block 920, where the DCCF can obtain the following first information from an NRF of the communication network:
- a first consumer message container that includes a data encryption key and a data integrity key that are encrypted by a public key associated with the first data consumer NF; and
- a data source message container that includes the data encryption key and the data integrity key that are encrypted by a public key associated with a source NF for the data to be collected.

The exemplary method can also include the operations of block 930, where the DCCF can send, to the data source NF, a subscription request for the data to be collected, wherein the subscription request includes the data source message container and the access token. The exemplary method can also include the operations of block 940, where the DCCF can send the first consumer message container to the first data consumer NF.

In some embodiments, the DCCF has no access to private keys, associated with the first data consumer NF and the data source NF, that can decrypt the first consumer message container and the data source message container.

In some embodiments, the first information (e.g., obtained in block 920) can also include one of the following:
- an authorization result that indicates whether the first data consumer NF is authorized to access the data to be collected; or
- an access token for the first data consumer NF in relation to the data to be collected.
In some of these embodiments, the access token for the first data consumer NF can be sent to the first data consumer NF together with the first consumer message container.

In some embodiments, the first information (e.g., obtained in block 920) can also include an access token for the DCCF in relation to the data to be collected. In such embodiments, the access token for the DCCF can be sent to the data source NF (e.g., in block 930) together with the data source message container.

In some embodiments, the exemplary method can also include the operations of block 950, where the DCCF can, based on determining that the first data consumer NF is authorized to access the data to be collected, initialize a messaging framework (e.g., 640 in Figures 6-7) associated with the DCCF to transport the data from the data source NF to the first data consumer NF.

In some embodiments, the first information can also include a duration of validity for the data encryption key and the data integrity key. In such embodiments, the exemplary method can also include the operations of blocks 960-970. In block 960, the DCCF can, after the duration of validity, obtain the following second information from the NRF:
- an updated first consumer message container that includes an updated data encryption key and an updated data integrity key that are encrypted by the public key associated with the first data consumer NF; and
- an updated data source message container that includes the updated data encryption key and the updated data integrity key that are encrypted by the public key associated with the data source NF.
In blocks 965-970, the DCCF can send the updated first consumer message container to the first data consumer NF and send the updated data source message container to the data source NF.

In some embodiments, the exemplary method can also include the operations of blocs 980-990. In block 980, the DCCF can receive, from a second data consumer NF of the communication network, a second request to collect data produced by the communication network. The second request identifies the same data to be collected as the first request. In block 985, the DCCF can obtain, from the NRF, a second consumer message container that includes the data encryption key and the data integrity key that are encrypted by a public key associated with the second data consumer NF. In block 990, the DCCF can send the second consumer message container to the second data consumer NF.

In some of these embodiments, one of the following can be obtained from the NRF (e.g., in block 985) together with the second consumer message container:
- an authorization result indicating whether the second data consumer NF is authorized to access the data to be collected; or
- an access token for the second data consumer NF in relation to the data to be collected.
In some variants, the access token for the second data consumer NF can be sent to the second data consumer NF (e.g., in block 990) together with the second consumer message container.

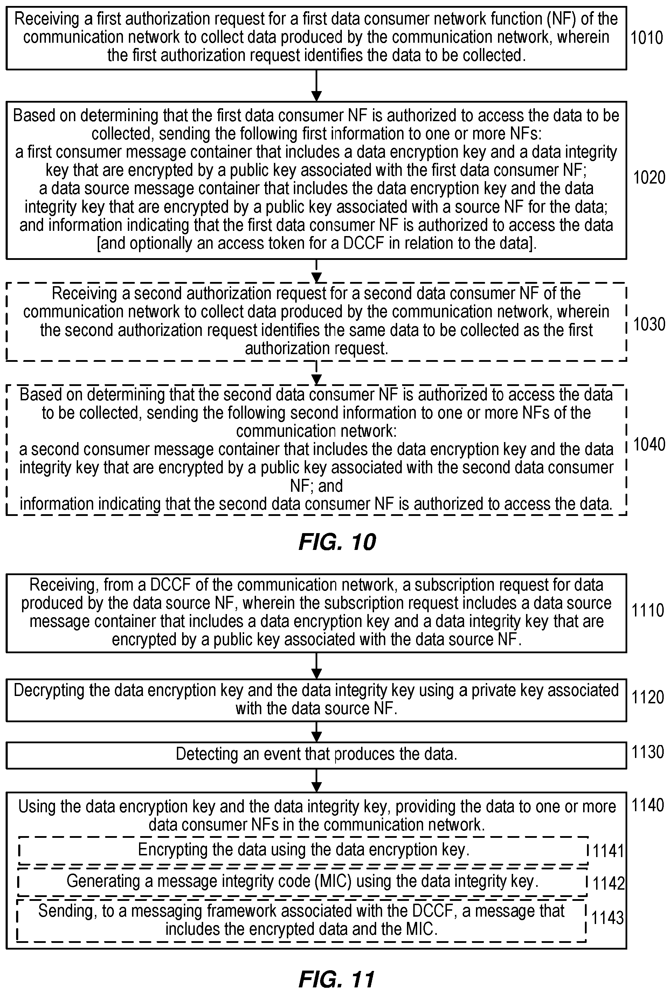

In addition, Figure 10 illustrates an exemplary method (*e.g.,* procedure) performed by an NRF of a communication network (e.g., 5GC), according to various embodiments of the present disclosure. The exemplary method shown in Figure 10 can be performed by an NRF such as described elsewhere herein.

The exemplary method can include the operations of block 1010, where the NRF can receive a first authorization request for a first data consumer NF of the communication network to collect data produced by the communication network, wherein the first authorization request identifies the data to be collected. The exemplary method can also include the operations of block 1020, where the NRF can, based on determining that the first data consumer NF is authorized to access the data to be collected, send the following first information to one or more NFs of the communication network:
- a first consumer message container that includes a data encryption key and a data integrity key that are encrypted by a public key associated with the first data consumer NF;
- a data source message container that includes the data encryption key and the data integrity key that are encrypted by a public key associated with a source NF for the data to be collected; and
- information indicating that the first data consumer NF is authorized to access the data to be collected.

In some embodiments, the information indicating that the first data consumer NF is authorized to access the data to be collected includes an authorization result (e.g., authorized/unauthorized) or an access token for the first data consumer NF in relation to the data to be collected. In some embodiments, the data source message container can be sent to the data source NF.

In some embodiments, the first information can also include an access token for a DCCF in relation to the data to be collected. In some of these embodiments, the first authorization request is received from the DCCF while the first consumer message container, the access token for the DCCF, and the information indicating that the first data consumer NF is authorized to access the data to be collected are sent to the DCCF. Figure 6 shows an example of these embodiments.

In other of these embodiments, the first authorization request is received from the first data consumer NF while the first consumer message container, the access token for the DCCF, and the access token for the first data consumer NF are sent to the first data consumer NF. Figure 7 shows an example of these embodiments.

In some embodiments, the exemplary method can also include the operations of blocks 1030-1040. In block 1030, the NRF can receive a second authorization request for a second data consumer NF of the communication network to collect data produced by the communication network. The second authorization request identifies the same data to be collected as the first authorization request. In block 1040, the NRF can, based on determining that the second data consumer NF is authorized to access the data to be collected, send the following second information to one or more NFs of the communication network:
- a second consumer message container that includes the data encryption key and the data integrity key that are encrypted by a public key associated with the second data consumer NF; and
- information indicating that the second data consumer NF is authorized to access the data to be collected.

In some of these embodiments, the information indicating that the second data consumer NF is authorized to access the data to be collected can include an authorization result or an access token for the second data consumer NF in relation to the data to be collected. In some of these embodiments, the second information can include an access token for the DCCF in relation to the data to be collected.

In addition, Figure 11 illustrates an exemplary method (*e.g.,* procedure) performed by a data source NF of a communication network (e.g., 5GC), according to various embodiments of the present disclosure. The exemplary method shown in Figure 11 can be performed by various NFs and/or network nodes described elsewhere herein.

The exemplary method can include the operations of block 1110, where the data source NF can receive, from a DCCF of the communication network, a subscription request for data produced by the data source NF. The subscription request includes a data source message container that includes a data encryption key and a data integrity key that are encrypted by a public key associated with the data source NF. The exemplary method can include the operations of block 1120, where the data source NF can decrypt the data encryption key and the data integrity key using a private key associated with the data source NF. The exemplary method can include the operations of blocks 1130-1140, where the data source NF can detect an event that produces the data and, using the data encryption key and the data integrity key, provide the data to one or more data consumer NFs in the communication network.

In some embodiments, the providing operations of block 1140 can include the operations of sub-blocks 1141-1143. In sub-block 1141, the data source NF can encrypt the data using the data encryption key. In sub-block 1142, the data source NF can generate a message integrity code (MIC) using the data integrity key. In sub-block 1143, the data source NF can send, to a messaging framework associated with the DCCF, a message that includes the encrypted data and the MIC.

In some embodiments, the subscription request (e.g., in block 1110) can include an access token for the DCCF in relation to the data produced by the data source NF.

Although various embodiments are described herein above in terms of methods, apparatus, devices, computer-readable medium and receivers, the person of ordinary skill will readily comprehend that such methods can be embodied by various combinations of hardware and software in various systems, communication devices, computing devices, control devices, apparatuses, non-transitory computer-readable media, *etc.*

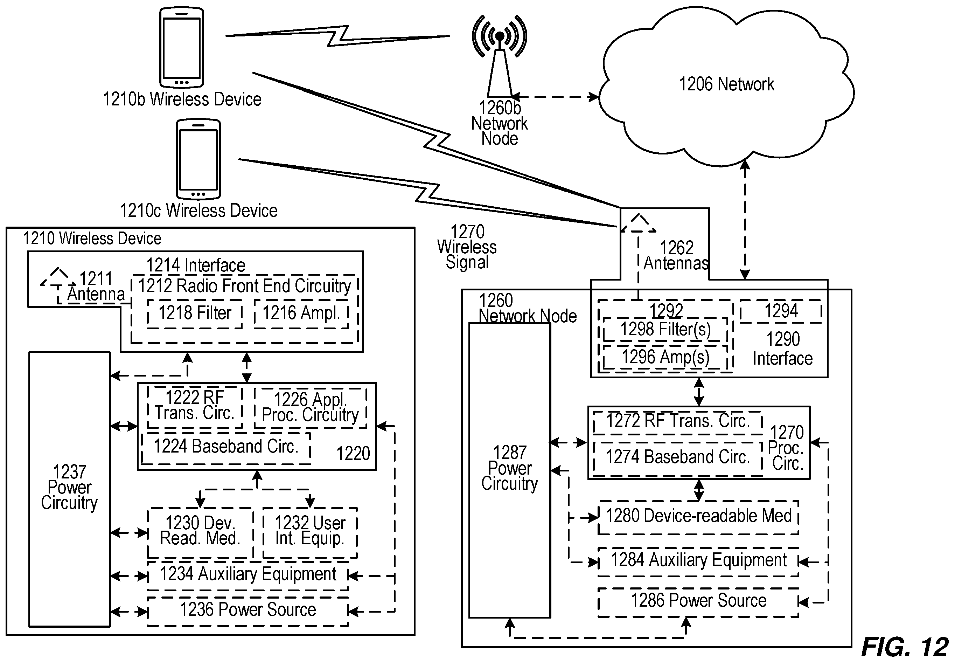

For example, Figure 12 shows an exemplary wireless network in which various embodiments disclosed herein can be implemented. For simplicity, the wireless network of Figure 12 only depicts network 1206, network nodes 1260 and 1260b, and WDs 1210, 1210b, and 1210c. In practice, a wireless network can further include any additional elements suitable to support communication between wireless devices or between a wireless device and another communication device, such as a landline telephone, a service provider, or any other network node or end device. Of the illustrated components, network node 1260 and wireless device (WD) 1210 are depicted with additional detail. The wireless network can provide communication and other types of services to one or more wireless devices to facilitate the wireless devices' access to and/or use of the services provided by, or via, the wireless network.

The wireless network can comprise and/or interface with any type of communication, telecommunication, data, cellular, and/or radio network or other similar type of system. In some embodiments, the wireless network can be configured to operate according to specific standards or other types of predefined rules or procedures. Thus, particular embodiments of the wireless network can implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 1206 can comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 1260 and WD 1210 comprise various components described in more detail below. These components work together in order to provide network node and/or wireless device functionality, such as providing wireless connections in a wireless network. In different embodiments, the wireless network can comprise any number of wired or wireless networks, network nodes, base stations, controllers, wireless devices, relay stations, and/or any other components or systems that can facilitate or participate in the communication of data and/or signals whether via wired or wireless connections.

Examples of network nodes include, but are not limited to, access points (APs) (*e.g.,* radio access points), base stations (BSs) (*e.g.,* radio base stations, Node Bs, evolved Node Bs (eNBs) and NR NodeBs (gNBs)). Base stations can be categorized based on the amount of coverage they provide (or, stated differently, their transmit power level) and can then also be referred to as femto base stations, pico base stations, micro base stations, or macro base stations. A base station can be a relay node or a relay donor node controlling a relay. A network node can also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station can also be referred to as nodes in a distributed antenna system (DAS).

Further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (*e.g.,* MSCs, MMEs), O&M nodes, OSS nodes, SON nodes, positioning nodes (*e.g.,* E-SMLCs), and/or MDTs. As another example, a network node can be a virtual network node as described in more detail below. More generally, however, network nodes can represent any suitable device (or group of devices) capable, configured, arranged, and/or operable to enable and/or provide a wireless device with access to the wireless network or to provide some service to a wireless device that has accessed the wireless network.

In Figure 12, network node 1260 includes processing circuitry 1270, device readable medium 1280, interface 1290, auxiliary equipment 1284, power source 1286, power circuitry 1287, and antenna 1262. Although network node 1260 illustrated in the example wireless network of Figure 12 can represent a device that includes the illustrated combination of hardware components, other embodiments can comprise network nodes with different combinations of components. It is to be understood that a network node comprises any suitable combination of hardware and/or software needed to perform the tasks, features, functions and methods and/or procedures disclosed herein. Moreover, while the components of network node 1260 are depicted as single boxes located within a larger box, or nested within multiple boxes, in practice, a network node can comprise multiple different physical components that make up a single illustrated component (*e.g.,* device readable medium 1280 can comprise multiple separate hard drives as well as multiple RAM modules).

Similarly, network node 1260 can be composed of multiple physically separate components (*e.g.,* a NodeB component and a RNC component, or a BTS component and a BSC component, *etc*.)*,* which can each have their own respective components. In certain scenarios in which network node 1260 comprises multiple separate components (*e.g.,* BTS and BSC components), one or more of the separate components can be shared among several network nodes. For example, a single RNC can control multiple NodeB's. In such a scenario, each unique NodeB and RNC pair, can in some instances be considered a single separate network node. In some embodiments, network node 1260 can be configured to support multiple radio access technologies (RATs). In such embodiments, some components can be duplicated (*e.g.,* separate device readable medium 1280 for the different RATs) and some components can be reused (e*.g.,* the same antenna 1262 can be shared by the RATs). Network node 1260 can also include multiple sets of the various illustrated components for different wireless technologies integrated into network node 1260, such as, for example, GSM, WCDMA, LTE, NR, WiFi, or Bluetooth wireless technologies. These wireless technologies can be integrated into the same or different chip or set of chips and other components within network node 1260.

Processing circuitry 1270 can be configured to perform any determining, calculating, or similar operations (*e.g.,* certain obtaining operations) described herein as being provided by a network node. These operations performed by processing circuitry 1270 can include processing information obtained by processing circuitry 1270 by, for example, converting the obtained information into other information, comparing the obtained information or converted information to information stored in the network node, and/or performing one or more operations based on the obtained information or converted information, and as a result of said processing making a determination.

Processing circuitry 1270 can comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide various functionality of network node 1260, either alone or in conjunction with other network node 1260 components (e.g., device readable medium 1280). Such functionality can include any of the various wireless features, functions, or benefits discussed herein.

For example, processing circuitry 1270 can execute instructions stored in device readable medium 1280 or in memory within processing circuitry 1270. In some embodiments, processing circuitry 1270 can include a system on a chip (SOC). As a more specific example, instructions (also referred to as a computer program product) stored in medium 1280 can include instructions that, when executed by processing circuitry 1270, can configure network node 1260 to perform operations corresponding to various exemplary methods (e.g., procedures) described herein.

In some embodiments, processing circuitry 1270 can include one or more of radio frequency (RF) transceiver circuitry 1272 and baseband processing circuitry 1274. In some embodiments, radio frequency (RF) transceiver circuitry 1272 and baseband processing circuitry 1274 can be on separate chips (or sets of chips), boards, or units, such as radio units and digital units. In alternative embodiments, part or all of RF transceiver circuitry 1272 and baseband processing circuitry 1274 can be on the same chip or set of chips, boards, or units

In certain embodiments, some or all of the functionality described herein as being provided by a network node, base station, eNB or other such network device can be performed by processing circuitry 1270 executing instructions stored on device readable medium 1280 or memory within processing circuitry 1270. In alternative embodiments, some or all of the functionality can be provided by processing circuitry 1270 without executing instructions stored on a separate or discrete device readable medium, such as in a hard-wired manner. In any of those embodiments, whether executing instructions stored on a device readable storage medium or not, processing circuitry 1270 can be configured to perform the described functionality. The benefits provided by such functionality are not limited to processing circuitry 1270 alone or to other components of network node 1260 but are enjoyed by network node 1260 as a whole, and/or by end users and the wireless network generally.

Device readable medium 1280 can comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that can be used by processing circuitry 1270. Device readable medium 1280 can store any suitable instructions, data or information, including a computer program, software, an application including one or more of logic, rules, code, tables, *etc.* and/or other instructions capable of being executed by processing circuitry 1270 and, utilized by network node 1260. Device readable medium 1280 can be used to store any calculations made by processing circuitry 1270 and/or any data received via interface 1290. In some embodiments, processing circuitry 1270 and device readable medium 1280 can be considered to be integrated.

Interface 1290 is used in the wired or wireless communication of signaling and/or data between network node 1260, network 1206, and/or WDs 1210. As illustrated, interface 1290 comprises port(s)/terminal(s) 1294 to send and receive data, for example to and from network 1206 over a wired connection. Interface 1290 also includes radio front end circuitry 1292 that can be coupled to, or in certain embodiments a part of, antenna 1262. Radio front end circuitry 1292 comprises filters 1298 and amplifiers 1296. Radio front end circuitry 1292 can be connected to antenna 1262 and processing circuitry 1270. Radio front end circuitry can be configured to condition signals communicated between antenna 1262 and processing circuitry 1270. Radio front end circuitry 1292 can receive digital data that is to be sent out to other network nodes or WDs via a wireless connection. Radio front end circuitry 1292 can convert the digital data into a radio signal having the appropriate channel and bandwidth parameters using a combination of filters 1298 and/or amplifiers 1296. The radio signal can then be transmitted via antenna 1262. Similarly, when receiving data, antenna 1262 can collect radio signals which are then converted into digital data by radio front end circuitry 1292. The digital data can be passed to processing circuitry 1270. In other embodiments, the interface can comprise different components and/or different combinations of components.

In certain alternative embodiments, network node 1260 may not include separate radio front end circuitry 1292, instead, processing circuitry 1270 can comprise radio front end circuitry and can be connected to antenna 1262 without separate radio front end circuitry 1292. Similarly, in some embodiments, all or some of RF transceiver circuitry 1272 can be considered a part of interface 1290. In still other embodiments, interface 1290 can include one or more ports or terminals 1294, radio front end circuitry 1292, and RF transceiver circuitry 1272, as part of a radio unit (not shown), and interface 1290 can communicate with baseband processing circuitry 1274, which is part of a digital unit (not shown).

Antenna 1262 can include one or more antennas, or antenna arrays, configured to send and/or receive wireless signals. Antenna 1262 can be coupled to radio front end circuitry 1290 and can be any type of antenna capable of transmitting and receiving data and/or signals wirelessly. In some embodiments, antenna 1262 can comprise one or more omni-directional, sector or panel antennas operable to transmit/receive radio signals between, for example, 2 GHz and 66 GHz. An omni-directional antenna can be used to transmit/receive radio signals in any direction, a sector antenna can be used to transmit/receive radio signals from devices within a particular area, and a panel antenna can be a line of sight antenna used to transmit/receive radio signals in a relatively straight line. In some instances, the use of more than one antenna can be referred to as MIMO. In certain embodiments, antenna 1262 can be separate from network node 1260 and can be connectable to network node 1260 through an interface or port.

Antenna 1262, interface 1290, and/or processing circuitry 1270 can be configured to perform any receiving operations and/or certain obtaining operations described herein as being performed by a network node. Any information, data and/or signals can be received from a wireless device, another network node and/or any other network equipment. Similarly, antenna 1262, interface 1290, and/or processing circuitry 1270 can be configured to perform any transmitting operations described herein as being performed by a network node. Any information, data and/or signals can be transmitted to a wireless device, another network node and/or any other network equipment.

Power circuitry 1287 can comprise, or be coupled to, power management circuitry and can be configured to supply the components of network node 1260 with power for performing the functionality described herein. Power circuitry 1287 can receive power from power source 1286. Power source 1286 and/or power circuitry 1287 can be configured to provide power to the various components of network node 1260 in a form suitable for the respective components (*e.g.,* at a voltage and current level needed for each respective component). Power source 1286 can either be included in, or external to, power circuitry 1287 and/or network node 1260. For example, network node 1260 can be connectable to an external power source (*e.g.,* an electricity outlet) via an input circuitry or interface such as an electrical cable, whereby the external power source supplies power to power circuitry 1287. As a further example, power source 1286 can comprise a source of power in the form of a battery or battery pack which is connected to, or integrated in, power circuitry 1287. The battery can provide backup power should the external power source fail. Other types of power sources, such as photovoltaic devices, can also be used.

Alternative embodiments of network node 1260 can include additional components beyond those shown in Figure 12 that can be responsible for providing certain aspects of the network node's functionality, including any of the functionality described herein and/or any functionality necessary to support the subject matter described herein. For example, network node 1260 can include user interface equipment to allow and/or facilitate input of information into network node 1260 and to allow and/or facilitate output of information from network node 1260. This can allow and/or facilitate a user to perform diagnostic, maintenance, repair, and other administrative functions for network node 1260.

Furthermore, various network functions (NFs, e.g., NRF, DCCF, data source NFs, data consumer NFs, etc.) described herein can be implemented with and/or hosted by different variants of network node 1260, such as the variants described above. As such, variants of network node 1260 can perform operations corresponding to any of the exemplary methods described above.

In some embodiments, a wireless device (WD, e.g., WD 1210) can be configured to transmit and/or receive information without direct human interaction. For instance, a WD can be designed to transmit information to a network on a predetermined schedule, when triggered by an internal or external event, or in response to requests from the network. Examples of a WD include, but are not limited to, smart phones, mobile phones, cell phones, voice over IP (VoIP) phones, wireless local loop phones, desktop computers, personal digital assistants (PDAs), wireless cameras, gaming consoles or devices, music storage devices, playback appliances, wearable devices, wireless endpoints, mobile stations, tablets, laptops, laptop-embedded equipment (LEE), laptop-mounted equipment (LME), smart devices, wireless customer-premise equipment (CPE), mobile-type communication (MTC) devices, Internet-of-Things (IoT) devices, vehicle-mounted wireless terminal devices, *etc.*

A WD can support device-to-device (D2D) communication, for example by implementing a 3GPP standard for sidelink communication, vehicle-to-vehicle (V2V), vehicle-to-infrastructure (V2I), vehicle-to-everything (V2X) and can in this case be referred to as a D2D communication device. As yet another specific example, in an Internet of Things (IoT) scenario, a WD can represent a machine or other device that performs monitoring and/or measurements and transmits the results of such monitoring and/or measurements to another WD and/or a network node. The WD can in this case be a machine-to-machine (M2M) device, which can in a 3GPP context be referred to as an MTC device. As one particular example, the WD can be a UE implementing the 3GPP narrow band internet of things (NB-IoT) standard. Particular examples of such machines or devices are sensors, metering devices such as power meters, industrial machinery, or home or personal appliances (*e.g.,* refrigerators, televisions, *etc.*) personal wearables (*e.g.,* watches, fitness trackers, *etc*.)*.* In other scenarios, a WD can represent a vehicle or other equipment that is capable of monitoring and/or reporting on its operational status or other functions associated with its operation. A WD as described above can represent the endpoint of a wireless connection, in which case the device can be referred to as a wireless terminal. Furthermore, a WD as described above can be mobile, in which case it can also be referred to as a mobile device or a mobile terminal.

As illustrated, wireless device 1210 includes antenna 1211, interface 1214, processing circuitry 1220, device readable medium 1230, user interface equipment 1232, auxiliary equipment 1234, power source 1236 and power circuitry 1237. WD 1210 can include multiple sets of one or more of the illustrated components for different wireless technologies supported by WD 1210, such as, for example, GSM, WCDMA, LTE, NR, WiFi, WiMAX, or Bluetooth wireless technologies, just to mention a few. These wireless technologies can be integrated into the same or different chips or set of chips as other components within WD 1210.

Antenna 1211 can include one or more antennas or antenna arrays, configured to send and/or receive wireless signals, and is connected to interface 1214. In certain alternative embodiments, antenna 1211 can be separate from WD 1210 and be connectable to WD 1210 through an interface or port. Antenna 1211, interface 1214, and/or processing circuitry 1220 can be configured to perform any receiving or transmitting operations described herein as being performed by a WD. Any information, data and/or signals can be received from a network node and/or another WD. In some embodiments, radio front end circuitry and/or antenna 1211 can be considered an interface.

As illustrated, interface 1214 comprises radio front end circuitry 1212 and antenna 1211. Radio front end circuitry 1212 comprise one or more filters 1218 and amplifiers 1216. Radio front end circuitry 1214 is connected to antenna 1211 and processing circuitry 1220 and can be configured to condition signals communicated between antenna 1211 and processing circuitry 1220. Radio front end circuitry 1212 can be coupled to or a part of antenna 1211. In some embodiments, WD 1210 may not include separate radio front end circuitry 1212; rather, processing circuitry 1220 can comprise radio front end circuitry and can be connected to antenna 1211. Similarly, in some embodiments, some or all of RF transceiver circuitry 1222 can be considered a part of interface 1214. Radio front end circuitry 1212 can receive digital data that is to be sent out to other network nodes or WDs via a wireless connection. Radio front end circuitry 1212 can convert the digital data into a radio signal having the appropriate channel and bandwidth parameters using a combination of filters 1218 and/or amplifiers 1216. The radio signal can then be transmitted via antenna 1211. Similarly, when receiving data, antenna 1211 can collect radio signals which are then converted into digital data by radio front end circuitry 1212. The digital data can be passed to processing circuitry 1220. In other embodiments, the interface can comprise different components and/or different combinations of components.

Processing circuitry 1220 can comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide WD 1210 functionality either alone or in combination with other WD 1210 components, such as device readable medium 1230. Such functionality can include any of the various wireless features or benefits discussed herein.

For example, processing circuitry 1220 can execute instructions stored in device readable medium 1230 or in memory within processing circuitry 1220 to provide the functionality disclosed herein. More specifically, instructions (also referred to as a computer program product) stored in medium 1230 can include instructions that, when executed by processor 1220, can configure wireless device 1210 to perform operations corresponding to various exemplary methods (e.g., procedures) described herein.

As illustrated, processing circuitry 1220 includes one or more of RF transceiver circuitry 1222, baseband processing circuitry 1224, and application processing circuitry 1226. In other embodiments, the processing circuitry can comprise different components and/or different combinations of components. In certain embodiments processing circuitry 1220 of WD 1210 can comprise a SOC. In some embodiments, RF transceiver circuitry 1222, baseband processing circuitry 1224, and application processing circuitry 1226 can be on separate chips or sets of chips. In alternative embodiments, part or all of baseband processing circuitry 1224 and application processing circuitry 1226 can be combined into one chip or set of chips, and RF transceiver circuitry 1222 can be on a separate chip or set of chips. In still alternative embodiments, part or all of RF transceiver circuitry 1222 and baseband processing circuitry 1224 can be on the same chip or set of chips, and application processing circuitry 1226 can be on a separate chip or set of chips. In yet other alternative embodiments, part or all of RF transceiver circuitry 1222, baseband processing circuitry 1224, and application processing circuitry 1226 can be combined in the same chip or set of chips. In some embodiments, RF transceiver circuitry 1222 can be a part of interface 1214. RF transceiver circuitry 1222 can condition RF signals for processing circuitry 1220.

In certain embodiments, some or all of the functionality described herein as being performed by a WD can be provided by processing circuitry 1220 executing instructions stored on device readable medium 1230, which in certain embodiments can be a computer-readable storage medium. In alternative embodiments, some or all of the functionality can be provided by processing circuitry 1220 without executing instructions stored on a separate or discrete device readable storage medium, such as in a hard-wired manner. In any of those particular embodiments, whether executing instructions stored on a device readable storage medium or not, processing circuitry 1220 can be configured to perform the described functionality. The benefits provided by such functionality are not limited to processing circuitry 1220 alone or to other components of WD 1210, but are enjoyed by WD 1210 as a whole, and/or by end users and the wireless network generally.

Processing circuitry 1220 can be configured to perform any determining, calculating, or similar operations (*e.g.,* certain obtaining operations) described herein as being performed by a WD. These operations, as performed by processing circuitry 1220, can include processing information obtained by processing circuitry 1220 by, for example, converting the obtained information into other information, comparing the obtained information or converted information to information stored by WD 1210, and/or performing one or more operations based on the obtained information or converted information, and as a result of said processing making a determination.

Device readable medium 1230 can be operable to store a computer program, software, an application including one or more of logic, rules, code, tables, *etc.* and/or other instructions capable of being executed by processing circuitry 1220. Device readable medium 1230 can include computer memory (*e.g.,* Random Access Memory (RAM) or Read Only Memory (ROM)), mass storage media (*e.g.,* a hard disk), removable storage media (*e.g.,* a Compact Disk (CD) or a Digital Video Disk (DVD)), and/or any other volatile or non-volatile, non-transitory device readable and/or computer executable memory devices that store information, data, and/or instructions that can be used by processing circuitry 1220. In some embodiments, processing circuitry 1220 and device readable medium 1230 can be considered to be integrated.

User interface equipment 1232 can include components that allow and/or facilitate a human user to interact with WD 1210. Such interaction can be of many forms, such as visual, audial, tactile, *etc.* User interface equipment 1232 can be operable to produce output to the user and to allow and/or facilitate the user to provide input to WD 1210. The type of interaction can vary depending on the type of user interface equipment 1232 installed in WD 1210. For example, if WD 1210 is a smart phone, the interaction can be via a touch screen; if WD 1210 is a smart meter, the interaction can be through a screen that provides usage (*e.g*., the number of gallons used) or a speaker that provides an audible alert (*e.g.,* if smoke is detected). User interface equipment 1232 can include input interfaces, devices and circuits, and output interfaces, devices and circuits. User interface equipment 1232 can be configured to allow and/or facilitate input of information into WD 1210 and is connected to processing circuitry 1220 to allow and/or facilitate processing circuitry 1220 to process the input information. User interface equipment 1232 can include, for example, a microphone, a proximity or other sensor, keys/buttons, a touch display, one or more cameras, a USB port, or other input circuitry. User interface equipment 1232 is also configured to allow and/or facilitate output of information from WD 1210, and to allow and/or facilitate processing circuitry 1220 to output information from WD 1210. User interface equipment 1232 can include, for example, a speaker, a display, vibrating circuitry, a USB port, a headphone interface, or other output circuitry. Using one or more input and output interfaces, devices, and circuits, of user interface equipment 1232, WD 1210 can communicate with end users and/or the wireless network and allow and/or facilitate them to benefit from the functionality described herein.

Auxiliary equipment 1234 is operable to provide more specific functionality which may not be generally performed by WDs. This can comprise specialized sensors for doing measurements for various purposes, interfaces for additional types of communication such as wired communications *etc.* The inclusion and type of components of auxiliary equipment 1234 can vary depending on the embodiment and/or scenario.

Power source 1236 can, in some embodiments, be in the form of a battery or battery pack. Other types of power sources, such as an external power source (e.g., an electricity outlet), photovoltaic devices or power cells, can also be used. WD 1210 can further comprise power circuitry 1237 for delivering power from power source 1236 to the various parts of WD 1210 which need power from power source 1236 to carry out any functionality described or indicated herein. Power circuitry 1237 can in certain embodiments comprise power management circuitry. Power circuitry 1237 can additionally or alternatively be operable to receive power from an external power source; in which case WD 1210 can be connectable to the external power source (such as an electricity outlet) via input circuitry or an interface such as an electrical power cable. Power circuitry 1237 can also in certain embodiments be operable to deliver power from an external power source to power source 1236. This can be, for example, for the charging of power source 1236. Power circuitry 1237 can perform any converting or other modification to the power from power source 1236 to make it suitable for supply to the respective components of WD 1210.

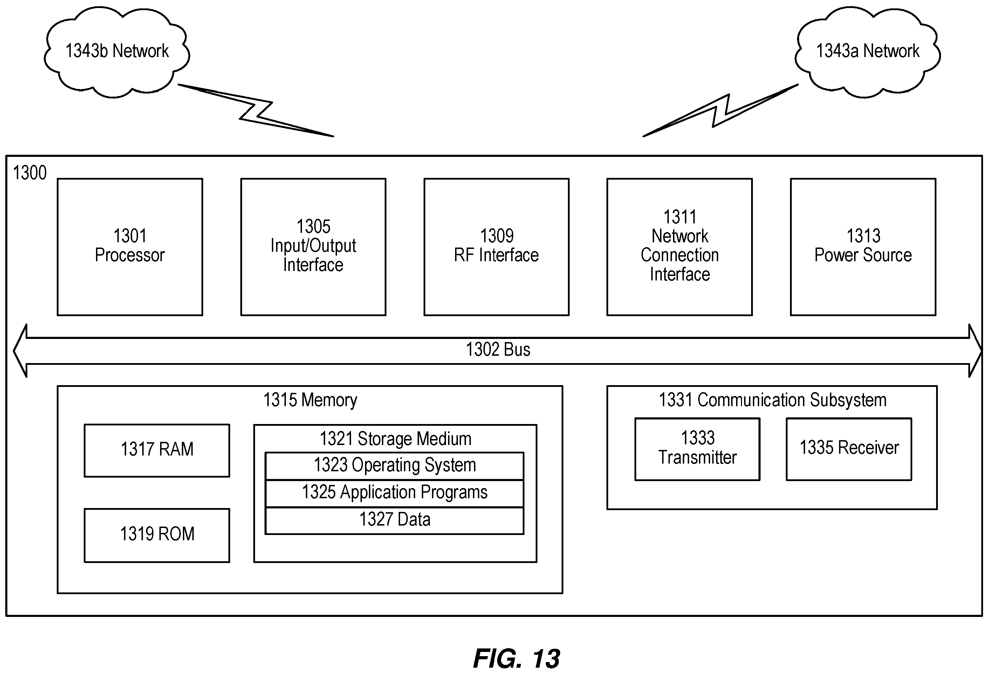

Figure 13 illustrates one embodiment of a UE in accordance with various aspects described herein. As used herein, a user equipment or UE may not necessarily have a user in the sense of a human user who owns and/or operates the relevant device. Instead, a UE can represent a device that is intended for sale to, or operation by, a human user but which may not, or which may not initially, be associated with a specific human user (e.g., a smart sprinkler controller). Alternatively, a UE can represent a device that is not intended for sale to, or operation by, an end user but which can be associated with or operated for the benefit of a user (*e.g.,* a smart power meter). UE 13200 can be any UE identified by the 3^{rd} Generation Partnership Project (3GPP), including a NB-IoT UE, a machine type communication (MTC) UE, and/or an enhanced MTC (eMTC) UE. UE 1300, as illustrated in Figure 13, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE can be used interchangeable. Accordingly, although Figure 13 is a UE, the components discussed herein are equally applicable to a WD, and vice-versa.

In Figure 13, UE 1300 includes processing circuitry 1301 that is operatively coupled to input/output interface 1305, radio frequency (RF) interface 1309, network connection interface 1311, memory 1315 including random access memory (RAM) 1317, read-only memory (ROM) 1319, and storage medium 1321 or the like, communication subsystem 1331, power source 1333, and/or any other component, or any combination thereof. Storage medium 1321 includes operating system 1323, application program 1325, and data 1327. In other embodiments, storage medium 1321 can include other similar types of information. Certain UEs can utilize all of the components shown in Figure 13, or only a subset of the components. The level of integration between the components can vary from one UE to another UE. Further, certain UEs can contain multiple instances of a component, such as multiple processors, memories, transceivers, transmitters, receivers, *etc.*

In Figure 13, processing circuitry 1301 can be configured to process computer instructions and data. Processing circuitry 1301 can be configured to implement any sequential state machine operative to execute machine instructions stored as machine-readable computer programs in the memory, such as one or more hardware-implemented state machines (*e.g.,* in discrete logic, FPGA, ASIC, *etc*.); programmable logic together with appropriate firmware; one or more stored program, general-purpose processors, such as a microprocessor or Digital Signal Processor (DSP), together with appropriate software; or any combination of the above. For example, the processing circuitry 1301 can include two central processing units (CPUs). Data can be information in a form suitable for use by a computer.

In the depicted embodiment, input/output interface 1305 can be configured to provide a communication interface to an input device, output device, or input and output device. UE 1300 can be configured to use an output device via input/output interface 1305. An output device can use the same type of interface port as an input device. For example, a USB port can be used to provide input to and output from UE 1300. The output device can be a speaker, a sound card, a video card, a display, a monitor, a printer, an actuator, an emitter, a smartcard, another output device, or any combination thereof. UE 1300 can be configured to use an input device via input/output interface 1305 to allow and/or facilitate a user to capture information into UE 1300. The input device can include a touch-sensitive or presence-sensitive display, a camera (e.g., a digital camera, a digital video camera, a web camera, *etc.*), a microphone, a sensor, a mouse, a trackball, a directional pad, a trackpad, a scroll wheel, a smartcard, and the like. The presence-sensitive display can include a capacitive or resistive touch sensor to sense input from a user. A sensor can be, for instance, an accelerometer, a gyroscope, a tilt sensor, a force sensor, a magnetometer, an optical sensor, a proximity sensor, another like sensor, or any combination thereof. For example, the input device can be an accelerometer, a magnetometer, a digital camera, a microphone, and an optical sensor.

In Figure 13, RF interface 1309 can be configured to provide a communication interface to RF components such as a transmitter, a receiver, and an antenna. Network connection interface 1311 can be configured to provide a communication interface to network 1343a. Network 1343a can encompass wired and/or wireless networks such as a local-area network (LAN), a wide-area network (WAN), a computer network, a wireless network, a telecommunications network, another like network or any combination thereof. For example, network 1343a can comprise a Wi-Fi network. Network connection interface 1311 can be configured to include a receiver and a transmitter interface used to communicate with one or more other devices over a communication network according to one or more communication protocols, such as Ethernet, TCP/IP, SONET, ATM, or the like. Network connection interface 1311 can implement receiver and transmitter functionality appropriate to the communication network links (*e.g.,* optical, electrical, and the like). The transmitter and receiver functions can share circuit components, software or firmware, or alternatively can be implemented separately.

RAM 1317 can be configured to interface via bus 1302 to processing circuitry 1301 to provide storage or caching of data or computer instructions during the execution of software programs such as the operating system, application programs, and device drivers. ROM 1319 can be configured to provide computer instructions or data to processing circuitry 1301. For example, ROM 1319 can be configured to store invariant low-level system code or data for basic system functions such as basic input and output (I/O), startup, or reception of keystrokes from a keyboard that are stored in a non-volatile memory. Storage medium 1321 can be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives.

In one example, storage medium 1321 can be configured to include operating system 1323; application program 1325 such as a web browser application, a widget or gadget engine or another application; and data file 1327. Storage medium 1321 can store, for use by UE 1300, any of a variety of various operating systems or combinations of operating systems. For example, application program 1325 can include executable program instructions (also referred to as a computer program product) that, when executed by processor 1301, can configure UE 1300 to perform operations corresponding to various exemplary methods (e.g., procedures) described herein.

Storage medium 1321 can be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 1321 can allow and/or facilitate UE 1300 to access computer-executable instructions, application programs or the like, stored on transitory or non-transitory memory media, to off-load data, or to upload data. An article of manufacture, such as one utilizing a communication system can be tangibly embodied in storage medium 1321, which can comprise a device readable medium.

In Figure 13, processing circuitry 1301 can be configured to communicate with network 1343b using communication subsystem 1331. Network 1343a and network 1343b can be the same network or networks or different network or networks. Communication subsystem 1331 can be configured to include one or more transceivers used to communicate with network 1343b. For example, communication subsystem 1331 can be configured to include one or more transceivers used to communicate with one or more remote transceivers of another device capable of wireless communication such as another WD, UE, or base station of a radio access network (RAN) according to one or more communication protocols, such as IEEE 802.13, CDMA, WCDMA, GSM, LTE, UTRAN, WiMax, or the like. Each transceiver can include transmitter 1333 and/or receiver 1335 to implement transmitter or receiver functionality, respectively, appropriate to the RAN links (*e.g.,* frequency allocations and the like). Further, transmitter 1333 and receiver 1335 of each transceiver can share circuit components, software or firmware, or alternatively can be implemented separately.

In the illustrated embodiment, the communication functions of communication subsystem 1331 can include data communication, voice communication, multimedia communication, short-range communications such as Bluetooth, near-field communication, location-based communication such as the use of the global positioning system (GPS) to determine a location, another like communication function, or any combination thereof. For example, communication subsystem 1331 can include cellular communication, Wi-Fi communication, Bluetooth communication, and GPS communication. Network 1343b can encompass wired and/or wireless networks such as a local-area network (LAN), a wide-area network (WAN), a computer network, a wireless network, a telecommunications network, another like network or any combination thereof. For example, network 1343b can be a cellular network, a Wi-Fi network, and/or a near-field network. Power source 1313 can be configured to provide alternating current (AC) or direct current (DC) power to components of UE 1300.

The features, benefits and/or functions described herein can be implemented in one of the components of UE 1300 or partitioned across multiple components of UE 1300. Further, the features, benefits, and/or functions described herein can be implemented in any combination of hardware, software or firmware. In one example, communication subsystem 1331 can be configured to include any of the components described herein. Further, processing circuitry 1301 can be configured to communicate with any of such components over bus 1302. In another example, any of such components can be represented by program instructions stored in memory that when executed by processing circuitry 1301 perform the corresponding functions described herein. In another example, the functionality of any of such components can be partitioned between processing circuitry 1301 and communication subsystem 1331. In another example, the non-computationally intensive functions of any of such components can be implemented in software or firmware and the computationally intensive functions can be implemented in hardware.

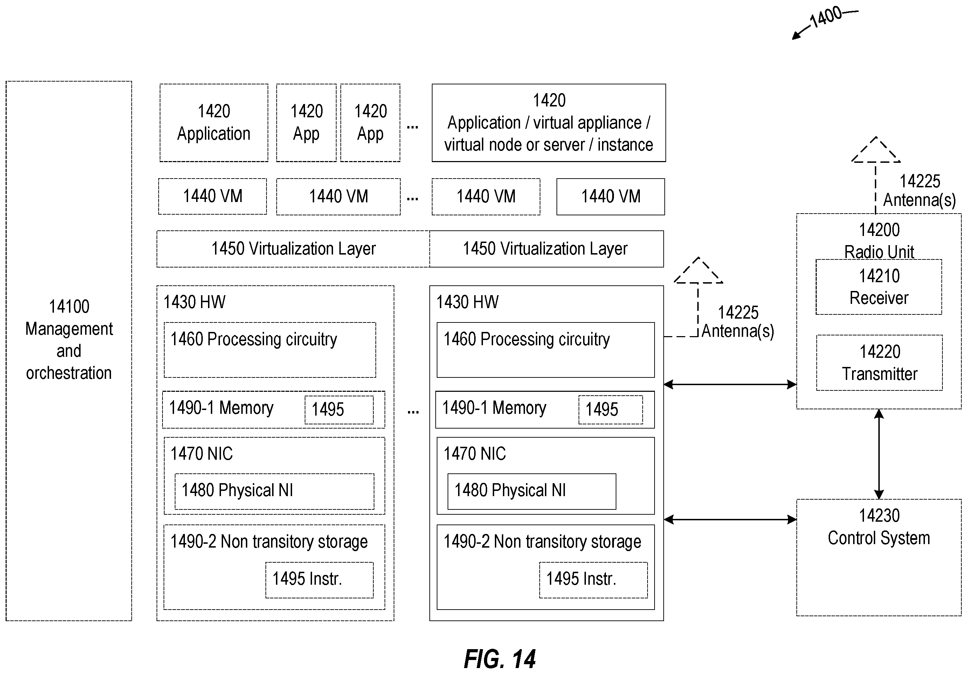

Figure 14 is a schematic block diagram illustrating a virtualization environment 1400 in which functions implemented by some embodiments can be virtualized. In the present context, virtualizing means creating virtual versions of apparatuses or devices which can include virtualizing hardware platforms, storage devices and networking resources. As used herein, virtualization can be applied to a node (*e.g.,* a virtualized base station or a virtualized radio access node) or to a device (*e.g.,* a UE, a wireless device or any other type of communication device) or components thereof and relates to an implementation in which at least a portion of the functionality is implemented as one or more virtual components (*e.g.,* via one or more applications, components, functions, virtual machines or containers executing on one or more physical processing nodes in one or more networks).

In some embodiments, some or all of the functions described herein can be implemented as virtual components executed by one or more virtual machines implemented in one or more virtual environments 1400 hosted by one or more of hardware nodes 1430. Further, in embodiments in which the virtual node is not a radio access node or does not require radio connectivity (*e.g.*, a core network node), then the network node can be entirely virtualized.

The functions can be implemented by one or more applications 1420 (which can alternatively be called software instances, virtual appliances, network functions, virtual nodes, virtual network functions, *etc*.) operative to implement some of the features, functions, and/or benefits of some of the embodiments disclosed herein. Applications 1420 are run in virtualization environment 1400 which provides hardware 1430 comprising processing circuitry 1460 and memory 1490. Memory 1490 contains instructions 1495 executable by processing circuitry 1460 whereby application 1420 is operative to provide one or more of the features, benefits, and/or functions disclosed herein.

Virtualization environment 1400 can include general-purpose or special-purpose network hardware devices (or nodes) 1430 comprising a set of one or more processors or processing circuitry 1460, which can be commercial off-the-shelf (COTS) processors, dedicated Application Specific Integrated Circuits (ASICs), or any other type of processing circuitry including digital or analog hardware components or special purpose processors. Each hardware device can comprise memory 1490-1 which can be non-persistent memory for temporarily storing instructions 1495 or software executed by processing circuitry 1460. For example, instructions 1495 can include program instructions (also referred to as a computer program product) that, when executed by processing circuitry 1460, can configure hardware node 1420 to perform operations corresponding to various exemplary methods (e.g., procedures) described herein. Such operations can also be attributed to virtual node(s) 1420 that is/are hosted by hardware node 1430.

Each hardware device can comprise one or more network interface controllers (NICs) 1470, also known as network interface cards, which include physical network interface 1480. Each hardware device can also include non-transitory, persistent, machine-readable storage media 1490-2 having stored therein software 1495 and/or instructions executable by processing circuitry 1460. Software 1495 can include any type of software including software for instantiating one or more virtualization layers 1450 (also referred to as hypervisors), software to execute virtual machines 1440 as well as software allowing it to execute functions, features and/or benefits described in relation with some embodiments described herein.

Virtual machines 1440, comprise virtual processing, virtual memory, virtual networking or interface and virtual storage, and can be run by a corresponding virtualization layer 1450 or hypervisor. Different embodiments of the instance of virtual appliance 1420 can be implemented on one or more of virtual machines 1440, and the implementations can be made in different ways.

During operation, processing circuitry 1460 executes software 1495 to instantiate the hypervisor or virtualization layer 1450, which can sometimes be referred to as a virtual machine monitor (VMM). Virtualization layer 1450 can present a virtual operating platform that appears like networking hardware to virtual machine 1440.

As shown in Figure 14, hardware 1430 can be a standalone network node with generic or specific components. Hardware 1430 can comprise antenna 14225 and can implement some functions via virtualization. Alternatively, hardware 1430 can be part of a larger cluster of hardware (e.g., such as in a data center or customer premise equipment (CPE)) where many hardware nodes work together and are managed via management and orchestration (MANO) 14100, which, among others, oversees lifecycle management of applications 1420.

Virtualization of the hardware is in some contexts referred to as network function virtualization (NFV). NFV can be used to consolidate many network equipment types onto industry standard high volume server hardware, physical switches, and physical storage, which can be located in data centers, and customer premise equipment.

In the context of NFV, virtual machine 1440 can be a software implementation of a physical machine that runs programs as if they were executing on a physical, non-virtualized machine. Each of virtual machines 1440, and that part of hardware 1430 that executes that virtual machine, be it hardware dedicated to that virtual machine and/or hardware shared by that virtual machine with others of the virtual machines 1440, forms a separate virtual network element (VNE).

Still in the context of NFV, Virtual Network Function (VNF) is responsible for handling specific network functions that run in one or more virtual machines 1440 on top of hardware networking infrastructure 1430 and corresponds to application 1420 in Figure 14.

In some embodiments, one or more radio units 14200 that each include one or more transmitters 14220 and one or more receivers 14210 can be coupled to one or more antennas 14225. Radio units 14200 can communicate directly with hardware nodes 1430 via one or more appropriate network interfaces and can be used in combination with the virtual components to provide a virtual node with radio capabilities, such as a radio access node or a base station. Nodes arranged in this manner can also communicate with one or more UEs, such as described elsewhere herein.

In some embodiments, some signaling can be performed via control system 14230, which can alternatively be used for communication between the hardware nodes 1430 and radio units 14200.

Furthermore, various network functions (NFs, e.g., NRF, DCCF, data source NFs, data consumer NFs, etc.) described herein can be implemented with and/or hosted by different variants of hardware node 1430 and/or virtual node 1420, such as the variants described above. As such, variants of hardware node 1430 and/or virtual node 1420 can perform operations corresponding to any of the exemplary methods described above.

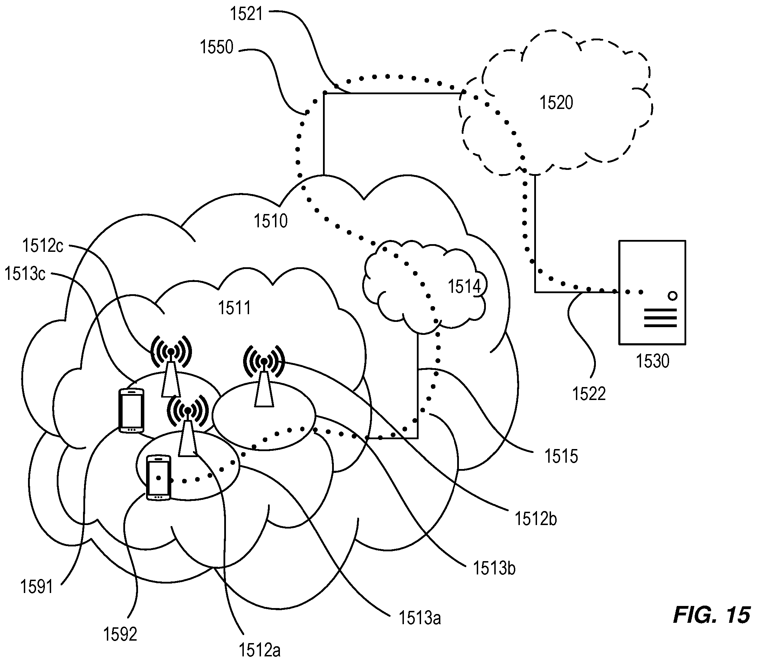

With reference to Figure 15, in accordance with an embodiment, a communication system includes telecommunication network 1510, such as a 3GPP-type cellular network, which comprises access network 1511, such as a radio access network, and core network 1514. Access network 1511 comprises a plurality of base stations 1512a, 1512b, 1512c, such as NBs, eNBs, gNBs or other types of wireless access points, each defining a corresponding coverage area 1513a, 1513b, 1513c. Each base station 1512a, 1512b, 1512c is connectable to core network 1514 over a wired or wireless connection 1515. A first UE 1591 located in coverage area 1513c can be configured to wirelessly connect to, or be paged by, the corresponding base station 1512c. A second UE 1592 in coverage area 1513a is wirelessly connectable to the corresponding base station 1512a. While a plurality of UEs 1591, 1592 are illustrated in this example, the disclosed embodiments are equally applicable to a situation where a sole UE is in the coverage area or where a sole UE is connecting to the
Telecommunication network 1510 is itself connected to host computer 1530, which can be embodied in the hardware and/or software of a standalone server, a cloud-implemented server, a distributed server or as processing resources in a server farm. Host computer 1530 can be under the ownership or control of a service provider or can be operated by the service provider or on behalf of the service provider. Connections 1521 and 1522 between telecommunication network 1510 and host computer 1530 can extend directly from core network 1514 to host computer 1530 or can go via an optional intermediate network 1520. Intermediate network 1520 can be one of, or a combination of more than one of, a public, private or hosted network; intermediate network 1520, if any, can be a backbone network or the Internet; in particular, intermediate network 1520 can comprise two or more sub-networks (not shown).

The communication system of Figure 15 as a whole enables connectivity between the connected UEs 1591, 1592 and host computer 1530. The connectivity can be described as an over-the-top (OTT) connection 1550. Host computer 1530 and the connected UEs 1591, 1592 are configured to communicate data and/or signaling via OTT connection 1550, using access network 1511, core network 1514, any intermediate network 1520 and possible further infrastructure (not shown) as intermediaries. OTT connection 1550 can be transparent in the sense that the participating communication devices through which OTT connection 1550 passes are unaware of routing of uplink and downlink communications. For example, base station 1512 may not or need not be informed about the past routing of an incoming downlink communication with data originating from host computer 1530 to be forwarded (*e.g.,* handed over) to a connected UE 1591. Similarly, base station 1512 need not be aware of the future routing of an outgoing uplink communication originating from the UE 1591 towards the host computer 1530.

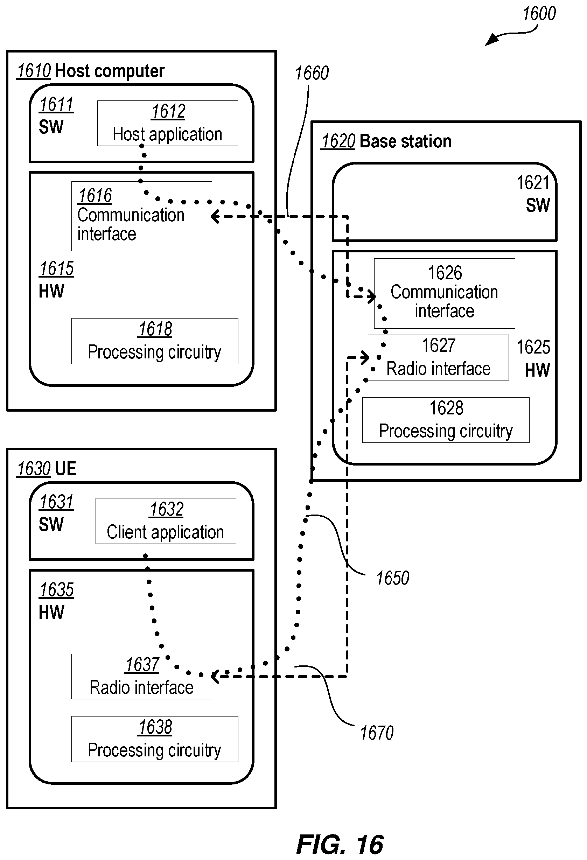

Example implementations, in accordance with an embodiment, of the UE, base station and host computer discussed in the preceding paragraphs will now be described with reference to Figure 16. In communication system 1600, host computer 1610 comprises hardware 1615 including communication interface 1616 configured to set up and maintain a wired or wireless connection with an interface of a different communication device of communication system 1600. Host computer 1610 further comprises processing circuitry 1618, which can have storage and/or processing capabilities. In particular, processing circuitry 1618 can comprise one or more programmable processors, application-specific integrated circuits, field programmable gate arrays or combinations of these (not shown) adapted to execute instructions. Host computer 1610 further comprises software 1611, which is stored in or accessible by host computer 1610 and executable by processing circuitry 1618. Software 1611 includes host application 1612. Host application 1612 can be operable to provide a service to a remote user, such as UE 1630 connecting via OTT connection 1650 terminating at UE 1630 and host computer 1610. In providing the service to the remote user, host application 1612 can provide user data which is transmitted using OTT connection 1650.

Communication system 1600 can also include base station 1620 provided in a telecommunication system and comprising hardware 1625 enabling it to communicate with host computer 1610 and with UE 1630. Hardware 1625 can include communication interface 1626 for setting up and maintaining a wired or wireless connection with an interface of a different communication device of communication system 1600, as well as radio interface 1627 for setting up and maintaining at least wireless connection 1670 with UE 1630 located in a coverage area (not shown in Figure 16) served by base station 1620. Communication interface 1626 can be configured to facilitate connection 1660 to host computer 1610. Connection 1660 can be direct, or it can pass through a core network (not shown in Figure 16) of the telecommunication system and/or through one or more intermediate networks outside the telecommunication system. In the embodiment shown, hardware 1625 of base station 1620 can also include processing circuitry 1628, which can comprise one or more programmable processors, application-specific integrated circuits, field programmable gate arrays or combinations of these (not shown) adapted to execute instructions.

Base station 1620 also includes software 1621 stored internally or accessible via an external connection. For example, software 1621 can include program instructions (also referred to as a computer program product) that, when executed by processing circuitry 1628, can configure base station 1620 to perform operations corresponding to various exemplary methods (e.g., procedures) described herein.

Communication system 1600 can also include UE 1630 already referred to, whose hardware 1635 can include radio interface 1637 configured to set up and maintain wireless connection 1670 with a base station serving a coverage area in which UE 1630 is currently located. Hardware 1635 of UE 1630 can also include processing circuitry 1638, which can comprise one or more programmable processors, application-specific integrated circuits, field programmable gate arrays or combinations of these (not shown) adapted to execute instructions.

UE 1630 also includes software 1631, which is stored in or accessible by UE 1630 and executable by processing circuitry 1638. Software 1631 includes client application 1632. Client application 1632 can be operable to provide a service to a human or non-human user via UE 1630, with the support of host computer 1610. In host computer 1610, an executing host application 1612 can communicate with the executing client application 1632 via OTT connection 1650 terminating at UE 1630 and host computer 1610. In providing the service to the user, client application 1632 can receive request data from host application 1612 and provide user data in response to the request data. OTT connection 1650 can transfer both the request data and the user data. Client application 1632 can interact with the user to generate the user data that it provides. Software 1631 can also include program instructions (also referred to as a computer program product) that, when executed by processing circuitry 1638, can configure UE 1630 to perform operations corresponding to various exemplary methods (e.g., procedures) described herein.

As an example, host computer 1610, base station 1620 and UE 1630 illustrated in Figure 16 can be similar or identical to host computers or base stations described in relation to other figures herein. For example, the inner workings of these entities can be as shown in Figure 16 and independently, the surrounding network topology can be that shown in other figures herein.

In Figure 16, OTT connection 1650 has been drawn abstractly to illustrate the communication between host computer 1610 and UE 1630 via base station 1620, without explicit reference to any intermediary devices and the precise routing of messages via these devices. Network infrastructure can determine the routing, which it can be configured to hide from UE 1630 or from the service provider operating host computer 1610, or both. While OTT connection 1650 is active, the network infrastructure can further take decisions by which it dynamically changes the routing (*e.g.,* on the basis of load balancing consideration or reconfiguration of the network).

Wireless connection 1670 between UE 1630 and base station 1620 is in accordance with the teachings of the embodiments described throughout this disclosure. One or more of the various embodiments improve the performance of OTT services provided to UE 1630 using OTT connection 1650, in which wireless connection 1670 forms the last segment. More precisely, the embodiments disclosed herein can improve flexibility for the network to monitor end-to-end quality-of-service (QoS) of data flows, including their corresponding radio bearers, associated with data sessions between a user equipment (UE) and another entity, such as an OTT data application or service external to the 5G network. These and other advantages can facilitate more timely design, implementation, and deployment of 5G/NR solutions. Furthermore, such embodiments can facilitate flexible and timely control of data session QoS, which can lead to improvements in capacity, throughput, latency, *etc.* that are envisioned by 5G/NR and important for the growth of OTT services.

A measurement procedure can be provided for the purpose of monitoring data rate, latency and other network operational aspects on which the one or more embodiments improve. There can further be an optional network functionality for reconfiguring OTT connection 1650 between host computer 1610 and UE 1630, in response to variations in the measurement results. The measurement procedure and/or the network functionality for reconfiguring OTT connection 1650 can be implemented in software 1611 and hardware 1615 of host computer 1610 or in software 1631 and hardware 1635 of UE 1630, or both. In embodiments, sensors (not shown) can be deployed in or in association with communication devices through which OTT connection 1650 passes; the sensors can participate in the measurement procedure by supplying values of the monitored quantities exemplified above or by supplying values of other physical quantities from which software 1611, 1631 can compute or estimate the monitored quantities. The reconfiguring of OTT connection 1650 can include message format, retransmission settings, preferred routing *etc.;* the reconfiguring need not affect base station 1620, and it can be unknown or imperceptible to base station 1620. Such procedures and functionalities can be known and practiced in the art. In certain embodiments, measurements can involve proprietary UE signaling facilitating host computer 1610's measurements of throughput, propagation times, latency and the like. The measurements can be implemented in that software 1611 and 1631 causes messages to be transmitted, in particular empty or 'dummy' messages, using OTT connection 1650 while it monitors propagation times, errors, *etc.*

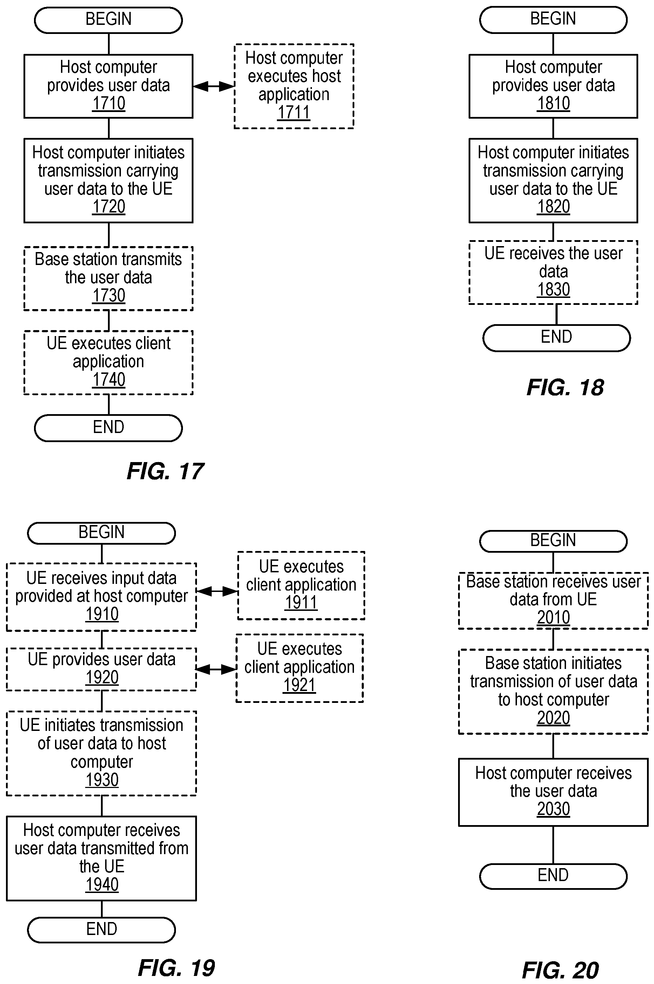

Figure 17 is a flowchart illustrating an exemplary method and/or procedure implemented in a communication system, in accordance with one embodiment. The communication system includes a host computer, a base station and a UE which, in some embodiments, can be those described with reference to other figures herein. For simplicity of the present disclosure, only drawing references to Figure 17 will be included in this section. In step 1710, the host computer provides user data. In substep 1711 (which can be optional) of step 1710, the host computer provides the user data by executing a host application. In step 1720, the host computer initiates a transmission carrying the user data to the UE. In step 1730 (which can be optional), the base station transmits to the UE the user data which was carried in the transmission that the host computer initiated, in accordance with the teachings of the embodiments described throughout this disclosure. In step 1740 (which can also be optional), the UE executes a client application associated with the host application executed by the host computer.

Figure 18 is a flowchart illustrating an exemplary method and/or procedure implemented in a communication system, in accordance with one embodiment. The communication system includes a host computer, a base station and a UE which can be those described with reference to other figures herein. For simplicity of the present disclosure, only drawing references to Figure 18 will be included in this section. In step 1810 of the method, the host computer provides user data. In an optional substep (not shown) the host computer provides the user data by executing a host application. In step 1820, the host computer initiates a transmission carrying the user data to the UE. The transmission can pass via the base station, in accordance with the teachings of the embodiments described throughout this disclosure. In step 1830 (which can be optional), the UE receives the user data carried in the transmission.

Figure 19 is a flowchart illustrating an exemplary method and/or procedure implemented in a communication system, in accordance with one embodiment. The communication system includes a host computer, a base station and a UE which can be those described with reference to other figures herein. For simplicity of the present disclosure, only drawing references to Figure 19 will be included in this section. In step 1910 (which can be optional), the UE receives input data provided by the host computer. Additionally or alternatively, in step 1920, the UE provides user data. In substep 1921 (which can be optional) of step 1920, the UE provides the user data by executing a client application. In substep 1911 (which can be optional) of step 1910, the UE executes a client application which provides the user data in reaction to the received input data provided by the host computer. In providing the user data, the executed client application can further consider user input received from the user. Regardless of the specific manner in which the user data was provided, the UE initiates, in substep 1930 (which can be optional), transmission of the user data to the host computer. In step 1940 of the method, the host computer receives the user data transmitted from the UE, in accordance with the teachings of the embodiments described throughout this disclosure.

Figure 20 is a flowchart illustrating an exemplary method and/or procedure implemented in a communication system, in accordance with one embodiment. The communication system includes a host computer, a base station and a UE which can be those described with reference to other figures herein. For simplicity of the present disclosure, only drawing references to Figure 20 will be included in this section. In step 2010 (which can be optional), in accordance with the teachings of the embodiments described throughout this disclosure, the base station receives user data from the UE. In step 2020 (which can be optional), the base station initiates transmission of the received user data to the host computer. In step 2030 (which can be optional), the host computer receives the user data carried in the transmission initiated by the base station.

The foregoing merely illustrates the principles of the disclosure. Various modifications and alterations to the described embodiments will be apparent to those skilled in the art in view of the teachings herein. It will thus be appreciated that those skilled in the art will be able to devise numerous systems, arrangements, and procedures that, although not explicitly shown or described herein, embody the principles of the disclosure and can be thus within the scope of the disclosure. Various embodiments can be used together with one another, as well as interchangeably therewith, as should be understood by those having ordinary skill in the art.

The term unit, as used herein, can have conventional meaning in the field of electronics, electrical devices and/or electronic devices and can include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, *etc.* Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

As described herein, device and/or apparatus can be represented by a semiconductor chip, a chipset, or a (hardware) module comprising such chip or chipset; this, however, does not exclude the possibility that a functionality of a device or apparatus, instead of being hardware implemented, be implemented as a software module such as a computer program or a computer program product comprising executable software code portions for execution or being run on a processor. Furthermore, functionality of a device or apparatus can be implemented by any combination of hardware and software. A device or apparatus can also be regarded as an assembly of multiple devices and/or apparatuses, whether functionally in cooperation with or independently of each other. Moreover, devices and apparatuses can be implemented in a distributed fashion throughout a system, so long as the functionality of the device or apparatus is preserved. Such and similar principles are considered as known to a skilled person.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In addition, certain terms used in the present disclosure, including the specification and drawings, can be used synonymously in certain instances (e.g., "data" and "information"). It should be understood, that although these terms (and/or other terms that can be synonymous to one another) can be used synonymously herein, there can be instances when such words can be intended to not be used synonymously.

## Claims

1. A method performed by a data consumer network function, NF, of a communication network, the method comprising:
sending (810) a request to collect data produced by the communication network, wherein the request identifies the data to be collected;
receiving (820) a consumer message container that includes a data encryption key and a data integrity key that are encrypted by a public key associated with the data consumer NF;
decrypting (830) the data encryption key and the data integrity key using a private key associated with the data consumer NF; and
using the data encryption key and the data integrity key, collecting (840) the data from a data source NF of the communication network.

2. The method of claim 1, wherein collecting (840) the data from the data source NF comprises:
receiving (841), from the data source NF, a message that includes the data to be collected and a message integrity code, MIC;
decrypting (842) the data using the data encryption key; and
verifying (843) the MIC using the data integrity key.

3. The method of any of claims 1-2, wherein the request to collect data is sent to a data collection coordination function, DCCF, of the communication network.

4. The method of any of claims 1-3, further comprising, after a duration of validity associated with the data encryption key and the data integrity key, receiving (850) an updated consumer message container that includes an updated data encryption key and an updated data integrity key that are encrypted by the public key associated with the data consumer NF.

5. A method performed by a data collection coordination function, DCCF, in a communication network, the method comprising:
receiving (910), from a first data consumer network function (NF) of the communication network, a first request to collect data produced by the communication network, wherein the request identifies the data to be collected;
obtaining (920) the following first information from a network repository function (NRF) of the communication network:
a first consumer message container that includes a data encryption key and a data integrity key that are encrypted by a public key associated with the first data consumer NF; and
a data source message container that includes the data encryption key and the data integrity key that are encrypted by a public key associated with a source NF for the data to be collected;
sending (930), to the data source NF, a subscription request for the data to be collected, wherein the subscription request includes the data source message container; and
sending (940) the first consumer message container to the first data consumer NF.

6. The method of claim 5, wherein the obtained first information also includes one of the following:
an authorization result that indicates whether the first data consumer NF is authorized to access the data to be collected; or
an access token for the first data consumer NF in relation to the data to be collected.

7. The method of any of claims 5-6, wherein:
the obtained first information also includes an access token for the DCCF in relation to the data to be collected; and
the access token for the DCCF is sent to the data source NF together with the data source message container.

8. A method performed by a network repository function, NRF, of a communication network, the method comprising:
receiving (1010) a first authorization request for a first data consumer network function, NF, of the communication network to collect data produced by the communication network, wherein the first authorization request identifies the data to be collected;
based on determining that the first data consumer NF is authorized to access the data to be collected, sending (1020) the following first information to one or more NFs of the communication network:
a first consumer message container that includes a data encryption key and a data integrity key that are encrypted by a public key associated with the first data consumer NF;
a data source message container that includes the data encryption key and the data integrity key that are encrypted by a public key associated with a source NF for the data to be collected; and
information indicating that the first data consumer NF is authorized to access the data to be collected.

9. The method of claim 8, wherein the information indicating that the first data consumer NF is authorized to access the data to be collected includes one of the following:
an authorization result; or
an access token for the first data consumer NF in relation to the data to be collected.

10. A method performed by a data source network function, NF, of a communication network, the method comprising:
receiving (1110), from a data collection coordination function, DCCF, of the communication network, a subscription request for data produced by the data source NF, wherein the subscription request includes a data source message container that includes a data encryption key and a data integrity key that are encrypted by a public key associated with the data source NF;
decrypting (1120) the data encryption key and the data integrity key using a private key associated with the data source NF;
detecting (1130) an event that produces the data; and
using the data encryption key and the data integrity key, providing (1140) the data to one or more data consumer NFs in the communication network.

11. The method of claim 10, wherein providing (1140) the data to the one or more data consumer NFs comprises:
encrypting (1141) the data using the data encryption key;
generating (1142) a message integrity code, MIC, using the data integrity key; and
sending (1143), to a messaging framework associated with the DCCF, a message that includes the encrypted data and the MIC.

12. A data consumer network function, NF (410, 610, 1260, 1420, 1430) of a communication network (198, 200, 1206, 1343a), the data consumer NF comprising:
communication interface circuitry (1290, 1470) configured to communicate with a network repository function, NRF (430, 630, 1260, 1420, 1430), a data collection coordination function, DCCF (420, 620, 1260, 1420, 1430), and one or more data source NFs (450, 650, 1260, 1420, 1430) of the communication network; and
processing circuitry (1270, 1460) operably coupled to the communication interface circuitry, whereby the processing circuitry and the communication interface circuitry are configured to:
send a request to collect data produced by the communication network, wherein the request identifies the data to be collected;
receive a consumer message container that includes a data encryption key and a data integrity key that are encrypted by a public key associated with the data consumer NF;
decrypt the data encryption key and the data integrity key using a private key associated with the data consumer NF; and
using the data encryption key and the data integrity key, collect the data from a data source NF of the communication network.

13. A data collection coordination function, DCCF (420, 620, 1260, 1420, 1430) of a communication network (198, 200, 1206, 1343a), the DCCF comprising:
communication interface circuitry (1290, 1470) configured to communicate with one or more data consumer network functions, NFs (410, 610, 1260, 1420, 1430), one or more data source NFs (450, 650, 1260, 1420, 1430), and a network repository function, NRF (430, 630, 1260, 1420, 1430) of the communication network; and
processing circuitry (1270, 1460) operably coupled to the communication interface circuitry, whereby the processing circuitry and the communication interface circuitry are configured to:
receive, from a first data consumer NF of the communication network, a first request to collect data produced by the communication network, wherein the request identifies the data to be collected;
obtain the following first information from the NRF:
a first consumer message container that includes a data encryption key and a data integrity key that are encrypted by a public key associated with the first data consumer NF; and
a data source message container that includes the data encryption key and the data integrity key that are encrypted by a public key associated with a source NF for the data to be collected;
send, to the data source NF, a subscription request for the data to be collected, wherein the subscription request includes the data source message container; and
send the first consumer message container to the first data consumer NF.

14. A network repository function, NRF (430, 630, 1260, 1420, 1430) of a communication network (198, 200, 1206, 1343a), the NRF comprising:
communication interface circuitry (1290, 1470) configured to communicate with one or more data consumer network functions, NFs (410, 610, 1260, 1420, 1430) and a data collection coordination function, DCCF (420, 620, 1260, 1420, 1430) of the communication network; and
processing circuitry (1270, 1460) operably coupled to the communication interface circuitry, whereby the processing circuitry and the communication interface circuitry are configured to:
receive a first authorization request for a first data consumer NF to collect data produced by the communication network, wherein the first authorization request identifies the data to be collected;
based on determining that the first data consumer NF is authorized to access the data to be collected, send the following first information to one or more NFs of the communication network:
a first consumer message container that includes a data encryption key and a data integrity key that are encrypted by a public key associated with the first data consumer NF;
a data source message container that includes the data encryption key and the data integrity key that are encrypted by a public key associated with a source NF for the data to be collected; and
information indicating that the first data consumer NF is authorized to access the data to be collected.

15. A data source network function, NF (450, 650, 1260, 1420, 1430) of a communication network (198, 200, 1206, 1343a), the data source NF comprising:
communication interface circuitry (1290, 1470) configured to communicate with a data collection coordination function, DCCF (420, 620, 1260, 1420, 1430) and one or more data consumer network functions, NFs (410, 610, 1260, 1420, 1430) of the communication network; and
processing circuitry (1270, 1460) operably coupled to the communication interface circuitry, whereby the processing circuitry and the communication interface circuitry are configured to:
receive, from the DCCF, a subscription request for data produced by the data source NF, wherein the subscription request includes a data source message container that includes a data encryption key and a data integrity key that are encrypted by a public key associated with the data source NF;
decrypt the data encryption key and the data integrity key using a private key associated with the data source NF;
detect an event that produces the data; and
using the data encryption key and the data integrity key, provide the data to the one or more data consumer NFs.

## Patentansprüche

1. Verfahren, das von einer Datenverbraucher-Netzwerkfunktion, NF, eines Kommunikationsnetzwerks durchgeführt wird, das Verfahren umfassend:
Senden (810) einer Anfrage zum Sammeln von durch das Kommunikationsnetzwerk erzeugten Daten, wobei die Anfrage die zu sammelnden Daten identifiziert;
Empfangen (820) eines Verbrauchernachrichtencontainers, der einen Datenverschlüsselungsschlüssel und einen Datenintegritätsschlüssel einschließt, die durch einen öffentlichen Schlüssel verschlüsselt sind, der der Datenverbraucher-NF zugeordnet ist;
Entschlüsseln (830) des Datenverschlüsselungsschlüssels und des Datenintegritätsschlüssels unter Verwenden eines privaten Schlüssels, der der Datenverbraucher-NF zugeordnet ist; und
unter Verwenden des Datenverschlüsselungsschlüssels und des Datenintegritätsschlüssels, Sammeln (840) der Daten von einer Datenquellen-NF des Kommunikationsnetzwerks.

2. Verfahren nach Anspruch 1, wobei das Sammeln (840) der Daten von der Datenquellen-NF umfasst:
Empfangen (841), von der Datenquellen-NF, einer Nachricht, die die zu sammelnden Daten und einen Nachrichtenintegritätscode, MIC, einschließt;
Entschlüsseln (842) der Daten unter Verwenden des Datenverschlüsselungsschlüssels; und
Verifizieren (843) des MIC unter Verwenden des Datenintegritätsschlüssels.

3. Verfahren nach einem der Ansprüche 1 bis 2, wobei die Anfrage zum Sammeln von Daten an eine Datensammlungskoordinationsfunktion, DCCF, des Kommunikationsnetzwerks gesendet wird.

4. Verfahren nach einem der Ansprüche 1 bis 3, ferner umfassend, nach einer Gültigkeitsdauer, die mit dem Datenverschlüsselungsschlüssel und dem Datenintegritätsschlüssel verknüpft ist, Empfangen (850) eines aktualisierten Verbrauchernachrichtencontainers, der einen aktualisierten Datenverschlüsselungsschlüssel und einen aktualisierten Datenintegritätsschlüssel einschließt, die durch den öffentlichen Schlüssel verschlüsselt sind, der der Datenverbraucher-NF zugeordnet ist.

5. Verfahren, das von einer Datensammlungskoordinationsfunktion, DCCF, in einem Kommunikationsnetzwerk durchgeführt wird, das Verfahren umfassend:
Empfangen (910) einer ersten Anfrage zum Sammeln von durch das Kommunikationsnetzwerk erzeugten Daten von einer ersten Datenverbraucher-Netzwerkfunktion (NF) des Kommunikationsnetzwerks, wobei die Anfrage die zu sammelnden Daten identifiziert;
Erhalten (920) der folgenden ersten Informationen von einer Netzwerk-Repository-Funktion (NRF) des Kommunikationsnetzwerks:
einen ersten Verbrauchernachrichtencontainer, der einen Datenverschlüsselungsschlüssel und einen Datenintegritätsschlüssel einschließt, die durch einen öffentlichen Schlüssel verschlüsselt sind, der der ersten Datenverbraucher-NF zugeordnet ist; und
einen Datenquellennachrichtencontainer, der den Datenverschlüsselungsschlüssel und den Datenintegritätsschlüssel einschließt, die durch einen öffentlichen Schlüssel verschlüsselt sind, der einer Quellen-NF für die zu sammelnden Daten zugeordnet ist;
Senden (930) einer Abonnementanfrage für die zu sammelnden Daten an die Datenquellen-NF, wobei die Abonnementanfrage den Datenquellennachrichtencontainer einschließt; und
Senden (940) des ersten Verbrauchernachrichtencontainers an die erste Datenverbraucher-NF.

6. Verfahren nach Anspruch 5, wobei die erhaltenen ersten Informationen auch eines der folgenden einschließen:
ein Autorisierungsergebnis, das angibt, ob die erste Datenverbraucher-NF berechtigt ist, auf die zu sammelnden Daten zuzugreifen; oder
ein Zugriffstoken für die erste Datenverbraucher-NF in Bezug auf die zu sammelnden Daten.

7. Verfahren nach einem der Ansprüche 5 bis 6, wobei:
die erhaltenen ersten Informationen auch ein Zugriffstoken für die DCCF in Bezug auf die zu sammelnden Daten einschließen; und
das Zugriffstoken für die DCCF zusammen mit dem Datenquellennachrichtencontainer an die Datenquellen-NF gesendet wird.

8. Verfahren, das von einer Netzwerk-Repository-Funktion, NRF, eines Kommunikationsnetzwerks durchgeführt wird, das Verfahren umfassend:
Empfangen (1010) einer ersten Autorisierungsanfrage für eine erste Datenverbraucher-Netzwerkfunktion, NF, des Kommunikationsnetzwerks zum Sammeln von durch das Kommunikationsnetzwerk erzeugten Daten, wobei die erste Autorisierungsanfrage die zu sammelnden Daten identifiziert;
basierend auf dem Bestimmen, dass die erste Datenverbraucher-NF berechtigt ist, auf die zu sammelnden Daten zuzugreifen, Senden (1020) der folgenden ersten Informationen an eine oder mehrere NFs des Kommunikationsnetzwerks:
einen ersten Verbrauchernachrichtencontainer, der einen Datenverschlüsselungsschlüssel und einen Datenintegritätsschlüssel einschließt, die durch einen öffentlichen Schlüssel verschlüsselt sind, der der ersten Datenverbraucher-NF zugeordnet ist;
einen Datenquellennachrichtencontainer, der den Datenverschlüsselungsschlüssel und den Datenintegritätsschlüssel einschließt, die durch einen öffentlichen Schlüssel verschlüsselt sind, der einer Quellen-NF für die zu sammelnden Daten zugeordnet ist; und
Informationen, die angeben, dass die erste Datenverbraucher-NF berechtigt ist, auf die zu sammelnden Daten zuzugreifen.

9. Verfahren nach Anspruch 8, wobei die Informationen, die angeben, dass die erste Datenverbraucher-NF berechtigt ist, auf die zu sammelnden Daten zuzugreifen, eines der folgenden einschließen:
ein Autorisierungsergebnis; oder
ein Zugriffstoken für die erste Datenverbraucher-NF in Bezug auf die zu sammelnden Daten.

10. Verfahren, das von einer Datenquellen-Netzwerkfunktion, NF, eines Kommunikationsnetzwerks durchgeführt wird, das Verfahren umfassend:
Empfangen (1110) einer Abonnementanfrage für von der Datenquellen-NF erzeugte Daten von einer Datensammlungskoordinationsfunktion, DCCF, des Kommunikationsnetzwerks, wobei die Abonnementanfrage einen Datenquellennachrichtencontainer einschließt, der einen Datenverschlüsselungsschlüssel und einen Datenintegritätsschlüssel einschließt, die durch einen öffentlichen Schlüssel verschlüsselt sind, der der Datenquellen-NF zugeordnet ist;
Entschlüsseln (1120) des Datenverschlüsselungsschlüssels und des Datenintegritätsschlüssels unter Verwenden eines privaten Schlüssels, der der Datenquellen-NF zugeordnet ist;
Erfassen (1130) eines Ereignisses, das die Daten erzeugt; und
unter Verwenden des Datenverschlüsselungsschlüssels und des Datenintegritätsschlüssels, Bereitstellen (1140) der Daten an eine oder mehrere Datenverbraucher-NFs in dem Kommunikationsnetzwerk.

11. Verfahren nach Anspruch 10, wobei das Bereitstellen (1140) der Daten an die eine oder mehreren Datenverbraucher-NFs umfasst:
Verschlüsseln (1141) der Daten unter Verwenden des Datenverschlüsselungsschlüssels;
Erzeugen (1142) eines Nachrichtenintegritätscodes, MIC, unter Verwenden des Datenintegritätsschlüssels; und
Senden (1143) einer Nachricht, die die verschlüsselten Daten und den MIC einschließt, an ein Messaging-Framework, das der DCCF zugeordnet ist.

12. Datenverbraucher-Netzwerkfunktion, NF (410, 610, 1260, 1420, 1430) eines Kommunikationsnetzwerks (198, 200, 1206, 1343a), wobei die Datenverbraucher-NF umfasst:
eine Kommunikationsschnittstellenschaltlogik (1290, 1470), die konfiguriert ist, um mit einer Netzwerk-Repository-Funktion, NRF (430, 630, 1260, 1420, 1430), einer Datensammlungskoordinationsfunktion, DCCF (420, 620, 1260, 1420, 1430), und einer oder mehreren Datenquellen-NFs (450, 650, 1260, 1420, 1430) des Kommunikationsnetzwerks zu kommunizieren; und
eine Verarbeitungsschaltlogik (1270, 1460), die betriebsfähig mit der Kommunikationsschnittstellenschaltlogik gekoppelt ist, wobei die Verarbeitungsschaltlogik und die Kommunikationsschnittstellenschaltlogik konfiguriert sind, um:
eine Anfrage zum Sammeln von durch das Kommunikationsnetzwerk erzeugten Daten zu senden, wobei die Anfrage die zu sammelnden Daten identifiziert;
einen Verbrauchernachrichtencontainer zu empfangen, der einen Datenverschlüsselungsschlüssel und einen Datenintegritätsschlüssel einschließt, die durch einen öffentlichen Schlüssel verschlüsselt sind, der der Datenverbraucher-NF zugeordnet ist;
den Datenverschlüsselungsschlüssel und den Datenintegritätsschlüssel unter Verwenden eines privaten Schlüssels zu entschlüsseln, der der Datenverbraucher-NF zugeordnet ist; und
unter Verwenden des Datenverschlüsselungsschlüssels und des Datenintegritätsschlüssels die Daten von einer Datenquellen-NF des Kommunikationsnetzwerks zu sammeln.

13. Datensammlungskoordinationsfunktion, DCCF (420, 620, 1260, 1420, 1430) eines Kommunikationsnetzwerks (198, 200, 1206, 1343a), wobei die DCCF umfasst:
eine Kommunikationsschnittstellenschaltlogik (1290, 1470), die konfiguriert ist, um mit einer oder mehreren Datenverbraucher-Netzwerkfunktionen, NFs (410, 610, 1260, 1420, 1430), einer oder mehreren Datenquellen-NFs (450, 650, 1260, 1420, 1430) und einer Netzwerk-Repository-Funktion, NRF (430, 630, 1260, 1420, 1430) des Kommunikationsnetzwerks zu kommunizieren; und
eine Verarbeitungsschaltlogik (1270, 1460), die betriebsfähig mit der Kommunikationsschnittstellenschaltlogik gekoppelt ist, wobei die Verarbeitungsschaltlogik und die Kommunikationsschnittstellenschaltlogik konfiguriert sind, um:
von einer ersten Datenverbraucher-NF des Kommunikationsnetzwerks eine erste Anfrage zum Sammeln von durch das Kommunikationsnetzwerk erzeugten Daten zu empfangen, wobei die Anfrage die zu sammelnden Daten identifiziert;
die folgenden ersten Informationen von der NRF zu erhalten:
einen ersten Verbrauchernachrichtencontainer, der einen Datenverschlüsselungsschlüssel und einen Datenintegritätsschlüssel einschließt, die durch einen öffentlichen Schlüssel verschlüsselt sind, der der ersten Datenverbraucher-NF zugeordnet ist; und
einen Datenquellennachrichtencontainer, der den Datenverschlüsselungsschlüssel und den Datenintegritätsschlüssel einschließt, die durch einen öffentlichen Schlüssel verschlüsselt sind, der einer Quellen-NF für die zu sammelnden Daten zugeordnet ist;
an die Datenquellen-NF eine Abonnementanfrage für die zu sammelnden Daten zu senden, wobei die Abonnementanfrage den Datenquellennachrichtencontainer einschließt; und
den ersten Verbrauchernachrichtencontainer an die erste Datenverbraucher-NF zu senden.

14. Netzwerk-Repository-Funktion, NRF (430, 630, 1260, 1420, 1430) eines Kommunikationsnetzwerks (198, 200, 1206, 1343a), wobei die NRF umfasst:
eine Kommunikationsschnittstellenschaltlogik (1290, 1470), die konfiguriert ist, um mit einer oder mehreren Datenverbraucher-Netzwerkfunktionen, NFs (410, 610, 1260, 1420, 1430) und einer Datensammlungskoordinationsfunktion, DCCF (420, 620, 1260, 1420, 1430) des Kommunikationsnetzwerks zu kommunizieren; und
eine Verarbeitungsschaltlogik (1270, 1460), die betriebsfähig mit der Kommunikationsschnittstellenschaltlogik gekoppelt ist, wobei die Verarbeitungsschaltlogik und die Kommunikationsschnittstellenschaltlogik konfiguriert sind, um:
eine erste Autorisierungsanfrage für eine erste Datenverbraucher-NF zum Sammeln von durch das Kommunikationsnetzwerk erzeugten Daten zu empfangen, wobei die erste Autorisierungsanfrage die zu sammelnden Daten identifiziert;
basierend auf dem Bestimmen, dass die erste Datenverbraucher-NF berechtigt ist, auf die zu sammelnden Daten zuzugreifen, die folgenden ersten Informationen an eine oder mehrere NFs des Kommunikationsnetzwerks zu senden:
einen ersten Verbrauchernachrichtencontainer, der einen Datenverschlüsselungsschlüssel und einen Datenintegritätsschlüssel einschließt, die durch einen öffentlichen Schlüssel verschlüsselt sind, der der ersten Datenverbraucher-NF zugeordnet ist;
einen Datenquellennachrichtencontainer, der den Datenverschlüsselungsschlüssel und den Datenintegritätsschlüssel einschließt, die durch einen öffentlichen Schlüssel verschlüsselt sind, der einer Quellen-NF für die zu sammelnden Daten zugeordnet ist; und
Informationen, die angeben, dass die erste Datenverbraucher-NF berechtigt ist, auf die zu sammelnden Daten zuzugreifen.

15. Datenquellen-Netzwerkfunktion, NF (450, 650, 1260, 1420, 1430) eines Kommunikationsnetzwerks (198, 200, 1206, 1343a), wobei die Datenquellen-NF umfasst:
eine Kommunikationsschnittstellenschaltlogik (1290, 1470), die konfiguriert ist, um mit einer Datensammlungskoordinationsfunktion, DCCF (420, 620, 1260, 1420, 1430) und einer oder mehreren Datenverbraucher-Netzwerkfunktionen, NFs (410, 610, 1260, 1420, 1430) des Kommunikationsnetzwerks zu kommunizieren; und
eine Verarbeitungsschaltlogik (1270, 1460), die betriebsfähig mit der Kommunikationsschnittstellenschaltlogik gekoppelt ist, wobei die Verarbeitungsschaltlogik und die Kommunikationsschnittstellenschaltlogik konfiguriert sind, um:
von der DCCF eine Abonnementanfrage für von der Datenquellen-NF erzeugte Daten zu empfangen, wobei die Abonnementanfrage einen Datenquellennachrichtencontainer einschließt, der einen Datenverschlüsselungsschlüssel und einen Datenintegritätsschlüssel einschließt, die durch einen öffentlichen Schlüssel verschlüsselt sind, der der Datenquellen-NF zugeordnet ist;
den Datenverschlüsselungsschlüssel und den Datenintegritätsschlüssel unter Verwenden eines privaten Schlüssels zu entschlüsseln, der der Datenquellen-NF zugeordnet ist;
ein Ereignis zu erfassen, das die Daten erzeugt; und
unter Verwenden des Datenverschlüsselungsschlüssels und des Datenintegritätsschlüssels die Daten an die
eine oder mehrere Datenverbraucher-NFs bereitzustellen.

## Revendications

1. Procédé réalisé par une fonction réseau, NF, de consommateur de données d'un réseau de communication, le procédé comprenant :
l'envoi (810) d'une demande de collecte de données produites par le réseau de communication, dans lequel la demande identifie les données à collecter ;
la réception (820) d'un conteneur de message de consommateur qui comporte une clé de chiffrement de données et une clé d'intégrité de données qui sont chiffrées par une clé publique associée à la NF de consommateur de données ;
le déchiffrement (830) de la clé de chiffrement de données et de la clé d'intégrité de données à l'aide d'une clé privée associée à la NF de consommateur de données ; et
à l'aide de la clé de chiffrement de données et de la clé d'intégrité de données, la collecte (840) des données à partir d'une NF de source de données du réseau de communication.

2. Procédé selon la revendication 1, dans lequel la collecte (840) des données à partir de la NF de source de données comprend :
la réception (841), à partir de la NF de source de données, d'un message qui comporte les données à collecter et un code d'intégrité de message, MIC ;
le déchiffrement (842) des données à l'aide de la clé de chiffrement de données ; et
la vérification (843) du MIC à l'aide de la clé d'intégrité de données.

3. Procédé selon l'une quelconque des revendications 1 à 2, dans lequel la demande de collecte de données est envoyée à une fonction de coordination de collecte de données, DCCF, du réseau de communication.

4. Procédé selon l'une quelconque des revendications 1 à 3, comprenant en outre, après une durée de validité associée à la clé de chiffrement de données et à la clé d'intégrité de données, la réception (850) d'un conteneur de message de consommateur mis à jour qui comporte une clé de chiffrement de données mise à jour et une clé d'intégrité de données mise à jour qui sont chiffrées par la clé publique associée à la NF de consommateur de données.

5. Procédé réalisé par une fonction de coordination de collecte de données, DCCF, dans un réseau de communication, le procédé comprenant :
la réception (910), à partir d'une première fonction réseau (NF) de consommateur de données du réseau de communication, d'une première demande de collecte de données produites par le réseau de communication, dans lequel la demande identifie les données à collecter ;
l'obtention (920) des premières informations suivantes auprès d'une fonction de référentiel de réseau (NRF) du réseau de communication :
un premier conteneur de message de consommateur qui comporte une clé de chiffrement de données et une clé d'intégrité de données qui sont chiffrées par une clé publique associée à la première NF de consommateur de données ; et
un conteneur de message de source de données qui comporte la clé de chiffrement de données et la clé d'intégrité de données qui sont chiffrées par une clé publique associée à une NF source pour les données à collecter ;
l'envoi (930), à la NF de source de données, d'une demande d'abonnement pour les données à collecter, dans lequel la demande d'abonnement comporte le conteneur de message de source de données ; et
l'envoi (940) du premier conteneur de message de consommateur à la première NF de consommateur de données.

6. Procédé selon la revendication 5, dans lequel les premières informations obtenues comportent également l'un parmi ce qui suit :
un résultat d'autorisation qui indique si la première NF de consommateur de données est autorisée à accéder aux données à collecter ; ou
un jeton d'accès pour la première NF de consommateur de données en relation avec les données à collecter.

7. Procédé selon l'une quelconque des revendications 5 à 6, dans lequel :
les premières informations obtenues comportent également un jeton d'accès pour la DCCF en relation avec les données à collecter ; et
le jeton d'accès pour la DCCF est envoyé à la NF de source de données conjointement avec le conteneur de message de source de données.

8. Procédé réalisé par une fonction de référentiel de réseau, NRF, d'un réseau de communication, le procédé comprenant :
la réception (1010) d'une première demande d'autorisation pour une première fonction réseau, NF, de consommateur de données, du réseau de communication de collecte de données produites par le réseau de communication, dans lequel la première demande d'autorisation identifie les données à collecter ;
en fonction du fait de déterminer que la première NF de consommateur de données est autorisée à accéder aux données à collecter, l'envoi (1020) des premières informations suivantes à une ou plusieurs NF du réseau de communication :
un premier conteneur de message de consommateur qui comporte une clé de chiffrement de données et une clé d'intégrité de données qui sont chiffrées par une clé publique associée à la première NF de consommateur de données ;
un conteneur de message de source de données qui comporte la clé de chiffrement de données et la clé d'intégrité de données qui sont chiffrées par une clé publique associée à une NF source pour les données à collecter ; et
des informations indiquant que la première NF de consommateur de données est autorisée à accéder aux données à collecter.

9. Procédé selon la revendication 8, dans lequel les informations indiquant que la première NF de consommateur de données est autorisée à accéder aux données à collecter comportent l'un parmi ce qui suit :
un résultat d'autorisation ; ou
un jeton d'accès pour la première NF de consommateur de données en relation avec les données à collecter.

10. Procédé réalisé par une fonction réseau, NF, de source de données d'un réseau de communication, le procédé comprenant :
la réception (1110), à partir d'une fonction de coordination de collecte de données, DCCF, du réseau de communication, d'une demande d'abonnement pour des données produites par la NF de source de données, dans lequel la demande d'abonnement comporte un conteneur de message de source de données qui comporte une clé de chiffrement de données et une clé d'intégrité de données qui sont chiffrées par une clé publique associée à la NF de source de données ;
le déchiffrement (1120) de la clé de chiffrement de données et de la clé d'intégrité de données à l'aide d'une clé privée associée à la NF de source de données ;
la détection (1130) d'un événement qui produit les données ; et
à l'aide de la clé de chiffrement de données et de la clé d'intégrité de données, la fourniture (1140) des données à une ou plusieurs NF de consommateur de données dans le réseau de communication.

11. Procédé selon la revendication 10, dans lequel la fourniture (1140) des données à la ou aux NF de consommateur de données comprend :
le chiffrement (1141) des données à l'aide de la clé de chiffrement de données ;
la génération (1142) d'un code d'intégrité de message, MIC, à l'aide de la clé d'intégrité de données ; et
l'envoi (1143), à un cadre de messagerie associé à la DCCF, d'un message qui comporte les données chiffrées et le MIC.

12. Fonction réseau, NF, de consommateur de données (410, 610, 1260, 1420, 1430) d'un réseau de communication (198, 200, 1206, 1343a), la NF de consommateur de données comprenant :
une circuiterie d'interface de communication (1290, 1470) configurée pour communiquer avec une fonction de référentiel de réseau, NRF (430, 630, 1260, 1420, 1430), une fonction de coordination de collecte de données, DCCF (420, 620, 1260, 1420, 1430), et une ou plusieurs NF de source de données (450, 650, 1260, 1420, 1430) du réseau de communication ; et
une circuiterie de traitement (1270, 1460) couplée de manière opérationnelle à la circuiterie d'interface de communication, moyennant quoi la circuiterie de traitement et la circuiterie d'interface de communication sont configurées pour :
envoyer une demande de collecte de données produites par le réseau de communication, dans lequel la demande identifie les données à collecter ;
recevoir un conteneur de message de consommateur qui comporte une clé de chiffrement de données et une clé d'intégrité de données qui sont chiffrées par une clé publique associée à la NF de consommateur de données ;
déchiffrer la clé de chiffrement de données et la clé d'intégrité de données à l'aide d'une clé privée associée à la NF de consommateur de données ; et
à l'aide de la clé de chiffrement de données et de la clé d'intégrité de données, collecter les données à partir d'une NF de source de données du réseau de communication.

13. Fonction de coordination de collecte de données, DCCF (420, 620, 1260, 1420, 1430) d'un réseau de communication (198, 200, 1206, 1343a), la DCCF comprenant :
une circuiterie d'interface de communication (1290, 1470) configurée pour communiquer avec une ou plusieurs fonctions de réseau, NF, de consommateur de données (410, 610, 1260, 1420, 1430), une ou plusieurs NF de source de données (450, 650, 1260, 1420, 1430), et une fonction de référentiel de réseau, NRF (430, 630, 1260, 1420, 1430) du réseau de communication ; et
une circuiterie de traitement (1270, 1460) couplée de manière opérationnelle à la circuiterie d'interface de communication, moyennant quoi la circuiterie de traitement et la circuiterie d'interface de communication sont configurées pour :
recevoir, à partir d'une première NF de consommateur de données du réseau de communication, une première demande de collecte de données produites par le réseau de communication, dans lequel la demande identifie les données à collecter ;
obtenir les premières informations suivantes auprès de la NRF :
un premier conteneur de message de consommateur qui comporte une clé de chiffrement de données et une clé d'intégrité de données qui sont chiffrées par une clé publique associée à la première NF de consommateur de données ; et
un conteneur de message de source de données qui comporte la clé de chiffrement de données et la clé d'intégrité de données qui sont chiffrées par une clé publique associée à une NF source pour les données à collecter ;
envoyer, à la NF de source de données, une demande d'abonnement pour les données à collecter, dans lequel la demande d'abonnement comporte le conteneur de message de source de données ; et
envoyer le premier conteneur de message de consommateur à la première NF de consommateur de données.

14. Fonction de référentiel de réseau, NRF (430, 630, 1260, 1420, 1430) d'un réseau de communication (198, 200, 1206, 1343a), la NRF comprenant :
une circuiterie d'interface de communication (1290, 1470) configurée pour communiquer avec une ou plusieurs fonctions de réseau, NF, de consommateur de données (410, 610, 1260, 1420, 1430) et une fonction de coordination de collecte de données, DCCF (420, 620, 1260, 1420, 1430) du réseau de communication ; et
une circuiterie de traitement (1270, 1460) couplée de manière opérationnelle à la circuiterie d'interface de communication, moyennant quoi la circuiterie de traitement et la circuiterie d'interface de communication sont configurées pour :
recevoir une première demande d'autorisation pour une première NF de consommateur de données de collecte de données produites par le réseau de communication, dans lequel la première demande d'autorisation identifie les données à collecter ;
sur la base du fait de déterminer que la première NF de consommateur de données est autorisée à accéder aux données à collecter, envoyer les premières informations suivantes à une ou plusieurs NF du réseau de communication :
un premier conteneur de message de consommateur qui comporte une clé de chiffrement de données et une clé d'intégrité de données qui sont chiffrées par une clé publique associée à la première NF de consommateur de données ;
un conteneur de message de source de données qui comporte la clé de chiffrement de données et la clé d'intégrité de données qui sont chiffrées par une clé publique associée à une NF source pour les données à collecter ; et
des informations indiquant que la première NF de consommateur de données est autorisée à accéder aux données à collecter.

15. Fonction réseau, NF, de source de données (450, 650, 1260, 1420, 1430) d'un réseau de communication (198, 200, 1206, 1343a), la NF de source de données comprenant :
une circuiterie d'interface de communication (1290, 1470) configurée pour communiquer avec une fonction de coordination de collecte de données, DCCF (420, 620, 1260, 1420, 1430) et une ou plusieurs fonctions de réseau, NF, de consommateur de données (410, 610, 1260, 1420, 1430) du réseau de communication ; et
une circuiterie de traitement (1270, 1460) couplée de manière opérationnelle à la circuiterie d'interface de communication, moyennant quoi la circuiterie de traitement et la circuiterie d'interface de communication sont configurées pour :
recevoir, à partir de la DCCF, une demande d'abonnement pour des données produites par la NF de source de données, dans lequel la demande d'abonnement comporte une source de données à un conteneur de message qui comporte une clé de chiffrement de données et une clé d'intégrité de données qui sont chiffrées par une clé publique associée à la NF de source de données ;
déchiffrer la clé de chiffrement de données et la clé d'intégrité de données à l'aide d'une clé privée associée à la NF de source de données ;
détecter un événement qui produit les données ; et
à l'aide de la clé de chiffrement de données et de la clé d'intégrité de données, fournir les données à la ou aux
NF de consommateur de données.
